# EUROPEAN PATENT APPLICATION

(11) **EP 4 252 953 A1**
(43) Date of publication of application: **04.10.2023**
(21) Application number: 21897881.5
(22) Date of filing: 19.11.2021
(51) Int. Cl.: B23K 26/066, B22F 3/105, B22F 3/16, B23K 26/067, B23K 26/064, B23K 26/21, B23K 26/34, B33Y 30/00

(54) **OPTICAL DEVICE AND THREE-DIMENSIONAL SHAPING DEVICE**

(30) Priority: 30.11.2020 JP 2020198677
(71) Applicant: SCREEN Holdings Co., Ltd., Kyoto 602-8585 (JP)
(72) Inventor: HISHITANI, Daisuke, Kyoto-shi, Kyoto 602-8585 (JP); MIZUNO, Hirofumi, Kyoto-shi, Kyoto 602-8585 (JP)
(74) Representative: Kilian Kilian & Partner
(86) International application number: PCT/JP2021/042660
(87) International publication number: WO 2022/113908

(57) **Abstract**

In a light shielding unit (24), an introductory reflection surface (41) is positioned in the vicinity of a focus position of a first-order diffracted beam on an optical axis (J36) of a first-order diffracted beam and in the vicinity of a zero-order diffracted beam aperture (240). The introductory reflection surface (41) reflects the first-order diffracted beam in a direction deviating from an incident direction of the first-order diffracted beam and going away from an optical axis (J35) of a zero-order diffracted beam. A light guide path (42) has an introduction port (44) to which light from the introductory reflection surface (41) is incident and guides light introduced from the introduction port (44). A circumference of the light guide path (42) is surrounded by a light shielding member. A light absorbing part (43) absorbs light guided while being diffused by the light guide path (42). It is thereby possible to suppress leakage of light from the light shielding unit (24) to the outside and suppress a temperature rise of the light shielding unit (24).

## Description

### TECHNICAL FIELD

The present invention relates to an optical apparatus which emits a modulated beam onto an irradiated surface on a target object, and a three-dimensional modeling apparatus which includes the optical apparatus.

### [CROSS REFERENCE TO RELATED APPLICATION]

The present application claims the benefit of priority to Japanese Patent Application No. 2020-198677 filed on November 30, 2020, the content of which is incorporated herein by reference in its entirety.

### BACKGROUND ART

In recent years, an SLS (Selective Laser Sintering) type three-dimensional modeling apparatus has been used, which emits a modulated laser beam to a modeling material such as metal powder or the like and melts the modeling material, to thereby perform three-dimensional modeling. In the three-dimensional modeling apparatus, for example, used is an optical apparatus which uses a diffractive optical modulator to modulate a laser beam and emits the modulated laser beam to a modeling material. In the optical apparatus, a zero-order diffracted beam from an optical modulator is guided to the modeling material, and a high-order diffracted beam such as a first-order diffracted beam or the like which is not emitted to the modeling material is blocked by a light shielding part provided inside the optical apparatus. The light shielding part is usually provided in the vicinity of a focus position of the first-order diffracted beam or the like in order to suppress upsizing of the light shielding part and the optical apparatus.

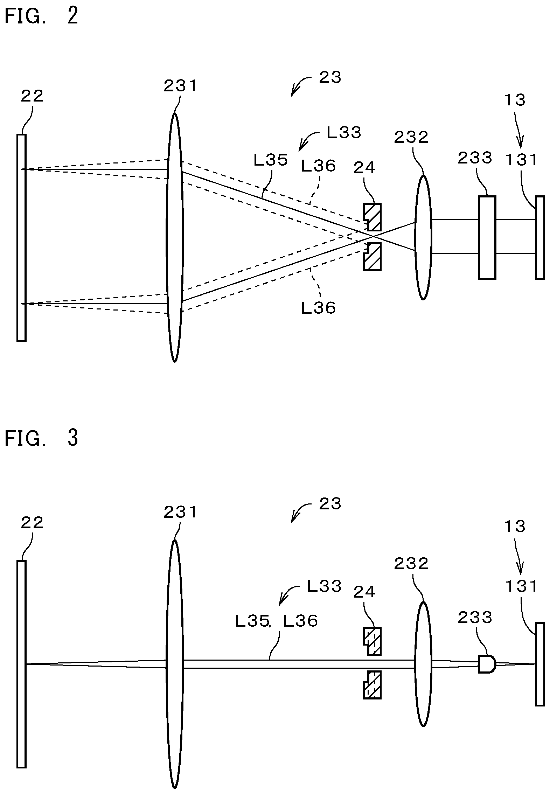

Such an optical apparatus is used in a pattern writing apparatus for emitting a laser beam onto a substrate to write a pattern thereon, and in a pattern writing apparatus disclosed in WO 2018/150996 (Document 1), an absorber for absorbing a diffracted beam which is not used for writing the pattern is provided inside a head. Further, as shown in FIG. 3 of Document 1, when the absorber TR is disposed away from any other optical element such as a reflection mirror or the like, the optical apparatus is upsized.

In the above-described three-dimensional modeling apparatus, an increase in the productivity is required, and it is considered that the power density (i.e., the light intensity per unit area) of a laser beam to be emitted to the modeling material should be increased. When the power density of the laser beam is increased, at a portion such as the above-described light shielding part, which blocks or absorbs the diffracted beam, the amount of heat into which the laser beam is converted increases and exhausting of heat cannot catch up with the increase, and therefore the temperature of the light shielding part locally increases and there arises a possibility that the light shielding part should be damaged. Further, with the temperature rise of the light shielding part, the temperature of the components therearound also arises and there arises a possibility that the irradiation accuracy of the laser beam should be degraded. Moreover, due to scattering light which cannot be absorbed by the light shielding part and leaks out to the surroundings, there arises a possibility that the temperature of the components therearound should increase and the irradiation accuracy of the laser beam should be degraded.

### SUMMARY OF THE INVENTION

The present invention is intended for an optical apparatus for emitting a modulated beam onto a target object, and it is an object of the present invention to suppress leakage of light from a light shielding unit to the outside and suppress a temperature rise of the light shielding unit.

The optical apparatus according to one preferred embodiment of the present invention includes an illumination optical system for collimating a laser beam emitted from a laser light source into a predetermined shape, an optical modulator for modulating the laser beam collimated by the illumination optical system into a modulated beam, and a projection optical system for guiding the modulated beam onto a target object. The projection optical system includes a light shielding unit for passing a zero-order diffracted beam from the optical modulator therethrough and blocking a first-order diffracted beam. The light shielding unit includes a zero-order diffracted beam aperture positioned in vicinity of a focus position of the zero-order diffracted beam on an optical axis of the zero-order diffracted beam, for passing the zero-order diffracted beam therethrough, an introductory reflection surface positioned in vicinity of a focus position of the first-order diffracted beam on an optical axis of the first-order diffracted beam and in vicinity of the zero-order diffracted beam aperture, for reflecting the first-order diffracted beam in a direction deviating from an incident direction of the first-order diffracted beam and going away from the optical axis of the zero-order diffracted beam, a light guide path having an introduction port to which light from the introductory reflection surface is incident and guiding light introduced from the introduction port, which is surrounded by a light shielding member, and a light absorbing part for absorbing light guided while being diffused by the light guide path.

According to the present invention, it is possible to suppress leakage of light from the light shielding unit to the outside and suppress a temperature rise of the light shielding unit.

Preferably, the introductory reflection surface is a mirror-finished surface, and the light guide path includes therein a scattering reflection surface for reflecting and guiding while scattering light from the introductory reflection surface.

Preferably, the scattering reflection surface has a linear fine unevenness extending along a plane parallel to both a depth direction up to the scattering reflection surface and another depth direction from the scattering reflection surface in the light guide path.

Preferably, the introductory reflection surface is disposed on a frontward side of the focus position of the first-order diffracted beam on the optical axis of the first-order diffracted beam, and the first-order diffracted beam is focused between a reflection surface to which light from the introductory reflection surface is directly incident and the introductory reflection surface in the light guide path.

Preferably, the light absorbing part includes an uneven surface provided with a light absorbing film on a surface thereof.

Preferably, the light shielding unit further includes a cooling channel disposed in vicinity of the light absorbing part, inside which a coolant flows.

Preferably, a cooling channel inside which a coolant flows is disposed also in vicinity of the light guide path.

Preferably, the light shielding unit is provided with a secondary light absorption part for absorbing a second-order diffracted beam from the optical modulator, on an outer surface extending in a direction perpendicular to the optical axis of the zero-order diffracted beam in the zero-order diffracted beam aperture and a circumference of the introductory reflection surface.

Preferably, the light guide path extends in parallel to a plane perpendicular to the optical axis of the zero-order diffracted beam.

Preferably, the light guide path extends while bending in a circumference of the zero-order diffracted beam aperture, to thereby surround the zero-order diffracted beam aperture.

Preferably, the introductory reflection surface is part of a circumferential inclined surface surrounding a circumference of the zero-order diffracted beam aperture and going away from the optical axis of the zero-order diffracted beam as it goes from a frontward side to a backward side in an optical axis direction of the zero-order diffracted beam. The light guide path is part of an annular space extending radially outward from the circumferential inclined surface.

Preferably, the zero-order diffracted beam and the first-order diffracted beam are each a planar beam extending in an up-and-down direction. The light guide path includes a pair of reflection surfaces parallel to each other, which extend in a direction inclined to the optical axis of the zero-order diffracted beam and the up-and-down direction. The introductory reflection surface is an end portion on a side closer to the zero-order diffracted beam on one reflection surface among the pair of reflection surfaces. Light from the introductory reflection surface is guided in the light guide path while reciprocating between the pair of reflection surfaces.

Preferably, the introductory reflection surface and the light guide path are provided in one cutting block formed by cutting processing.

Preferably, the light shielding unit blocks a plurality of first-order diffracted beams from the optical modulator. The light shielding unit includes a plurality of light shielding parts corresponding to the plurality of first-order diffracted beams, respectively. Each light shielding part includes the introductory reflection surface and the light guide path. Respective relative positions of the plurality of light shielding parts to the zero-order diffracted beam aperture are variable.

The present invention is also intended for a three-dimensional modeling apparatus. The three-dimensional modeling apparatus according to one preferred embodiment of the present invention includes the above-described optical apparatus, a laser light source for emitting the laser beam to the optical apparatus, and a scanning part which is the target object irradiated with the modulated beam from the optical apparatus and scans the modulated beam on a modeling material.

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a view showing a configuration of a three-dimensional modeling apparatus including an optical apparatus in accordance with a first preferred embodiment;
FIG. 2 is a view showing a structure of a projection optical system;
FIG. 3 is a view showing a structure of the projection optical system;
FIG. 4 is a perspective view of a light shielding unit;
FIG. 5 is a perspective view showing the inside of the light shielding unit;
FIG. 6 is an elevational view of the light shielding unit;
FIG. 7 is a perspective view showing the inside of the light shielding unit;
FIG. 8 is an elevational view showing one light shielding part which is enlarged;
FIG. 9 is a perspective view showing a first internal reflection surface which is enlarged;
FIG. 10 is an elevational view of a third member;
FIG. 11 is a view showing a structure of a projection optical system of an optical apparatus in accordance with a second preferred embodiment;
FIG. 12 is a view showing a structure of the projection optical system;
FIG. 13 is a perspective view of a light shielding unit;
FIG. 14 is a perspective view showing the inside of the light shielding unit;
FIG. 15 is a cross section of the light shielding unit;
FIG. 16 is a cross section showing one light shielding part which is enlarged;
FIG. 17 is a perspective view of a light shielding unit in accordance with a third preferred embodiment;
FIG. 18 is a perspective view showing the inside of the light shielding unit; and
FIG. 19 is a cross section of the light shielding unit.

### DESCRIPTION OF EMBODIMENTS

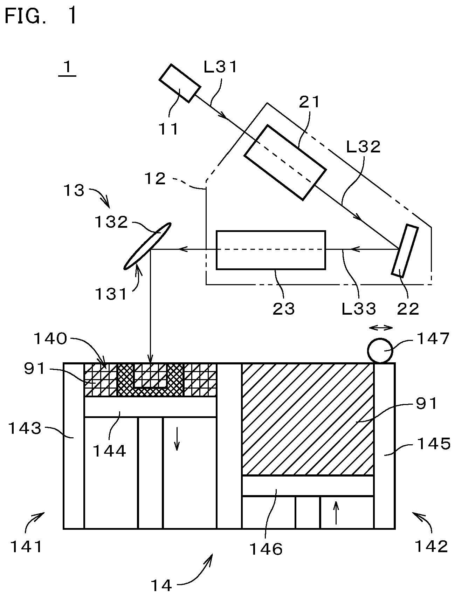

FIG. 1 is a view showing a configuration of a three-dimensional modeling apparatus 1 including an optical apparatus 12 in accordance with the first preferred embodiment of the present invention. The three-dimensional modeling apparatus 1 is an SLM (Selective Laser Melting) type three-dimensional modeling apparatus which emits a modulated laser beam to a powdery or pasty modeling material and melts the modeling material, to thereby perform three-dimensional modeling. The modeling material is, for example, a metal, engineering plastics, ceramics, a synthetic resin, or the like. The modeling material may contain a plurality of kinds of materials.

The three-dimensional modeling apparatus 1 includes a laser light source 11, an optical apparatus 12, a scanning part 13, and a material feeding mechanism 14. In the three-dimensional modeling apparatus 1, a laser beam L31 emitted from the laser light source 11 is guided to the scanning part 13 by the optical apparatus 12 and scanned on a modeling material 91 inside a modeling space 140 of the material feeding mechanism 14 by the scanning part 13. A portion of the modeling material 91 which is irradiated with the laser beam is thereby melted. Then, by repeating the supply of the modeling material 91 into the modeling space 140 and the scan of the laser beam on the modeling material 91, a three-dimensional model is formed. In FIG. 1, for easy understanding of this figure, constituent elements of the optical apparatus 12 are surrounded by a two-dot chain line.

In the three-dimensional modeling apparatus 1, the constituent elements such as the laser light source 11, the optical apparatus 12 (for example, an optical modulator 22 described later), the scanning part 13, the material feeding mechanism 14, and the like are controlled by a not-shown control part on the basis of design data (e.g., CAD data) or the like of a three-dimensional model to be produced. The control part is, for example, an ordinary computer including a processor, a memory, an input/output part, and a bus.

The laser light source 11 emits the laser beam L31 to the optical apparatus 12. The laser light source 11 is, for example, a fiber laser light source. The wavelength of the laser beam L31 is, for example, 1.070 µm.

The optical apparatus 12 modulates the laser beam L31 from the laser light source 11 into a modulated beam L33 and emits the modulated beam L33 to the scanning part 13. The optical apparatus 12 includes an illumination optical system 21, an optical modulator 22, and a projection optical system 23. The illumination optical system 21 and the projection optical system 23 each include a plurality of optical elements such as lenses or the like, as described later.

The illumination optical system 21 collimates the laser beam L31 from the laser light source 11 into a predetermined shape, to be guided to the optical modulator 22. In the present preferred embodiment, the illumination optical system 21 collimates the laser beam L31 into a parallel beam L32 which is substantially long linear in one direction (hereinafter, referred to as a "long axis direction") and guides the parallel beam L32 to the optical modulator 22. In other words, the cross-sectional shape of the parallel beam L32 is a substantially linear shape which is long in the long axis direction and short in a short axis direction perpendicular to the long axis direction. The cross-sectional shape of the parallel beam L32 is a shape of the parallel beam L32 in a plane perpendicular to a traveling direction of the parallel beam L32. In the following description, same as above, the cross section of light refers to a cross section of the light in a plane perpendicular to a traveling direction of the light. The cross-sectional shape of the parallel beam L32 can be regarded to be substantially rectangular. The cross section of the parallel beam L32 has the same size at any position in the traveling direction of the parallel beam L32. The shape of an irradiation region of the parallel beam L32 on the optical modulator 22 is, for example, a substantially linear (or substantially rectangular) shape having a length of 28 mm in the long axis direction and a length of 1 mm in the short axis direction.

The optical modulator 22 modulates the parallel beam L32 from the illumination optical system 21 into the modulated beam L33 and guides the modulated beam L33 to the projection optical system 23. As the optical modulator 22, for example, a GLV (Grating Light Valve) (registered trademark) which is a one-dimensional spatial light modulating element, or the like can be used.

The optical modulator 22 includes a plurality of modulation elements (not shown) arranged in a direction corresponding to the long axis direction of the parallel beam L32. Each of the modulation elements includes a plurality of ribbons arranged adjacent to one another. In the optical modulator 22, light modulation using a diffraction grating is performed, and reflected light from each modulation element is switched between a zero-order diffracted beam (i.e., specularly reflected light) and a non-zero-order diffracted beam. The zero-order diffracted beam emitted from the optical modulator 22 is guided to the scanning part 13 by the projection optical system 23. Further, the non-zero-order diffracted beam emitted from the optical modulator 22 is blocked and absorbed on the frontward side of the scanning part 13 by a later-described light shielding unit 24 provided in the projection optical system 23.

The projection optical system 23 condenses and guides the modulated beam L33 from the optical modulator 22 to the scanning part 13. In other words, the scanning part 13 is a target object onto which the modulated beam L33 is guided by the optical apparatus 12. The modulated beam L33 is emitted onto an irradiated surface 131 of the scanning part 13.

The scanning part 13 reflects the modulated beam L33 from the projection optical system 23 of the optical apparatus 12 and scans the modulated beam L33 on the modeling material 91 inside the modeling space 140 of the material feeding mechanism 14. As the scanning part 13, for example, a galvano scanner, a polygon laser scanner, or the like can be used. In the present preferred embodiment, the scanning part 13 is a galvano scanner including a galvanometer mirror 132 and a galvano motor (not shown), and a reflection surface of the galvanometer mirror 132 serves as the above-described irradiated surface 131. In the scanning part 13, the galvanometer mirror 132 is rotated by the galvano motor and a traveling direction of the modulated beam L33 reflected by the galvanometer mirror 132 is thereby changed. As a result, the modulated beam L33 emitted onto the modeling material 91 is scanned in a scan direction corresponding to the short axis direction of the modulated beam L33.

The material feeding mechanism 14 includes a modeling part 141 and a feeding part 142. The modeling part 141 includes a first cylinder 143 and a first piston 144. The first cylinder 143 is a tubular member extending in an up-and-down direction. The plan-view shape of an internal space of the first cylinder 143 is, for example, substantially rectangular. The first piston 144 is a substantially flat plate-like or substantially columnar member which is accommodated in the internal space of the first cylinder 143, and the plan-view shape thereof is almost the same as that of the internal space of the first cylinder 143. The first piston 144 is movable in the up-and-down direction inside the internal space of the first cylinder 143. In the modeling part 141, a three-dimensional space surrounded by an inner surface of the first cylinder 143 and an upper surface of the first piston 144 serves as the modeling space 140 in which the three-dimensional modeling is performed by using the modulated beam L33.

The feeding part 142 includes a second cylinder 145, a second piston 146, and a squeegee 147. The second cylinder 145 is a tubular member extending in the up-and-down direction and disposed adjacent to the side of the first cylinder 143. The plan-view shape of an internal space of the second cylinder 145 is, for example, substantially rectangular. The second piston 146 is a substantially flat plate-like or substantially columnar member which is accommodated in the internal space of the second cylinder 145, and the plan-view shape thereof is almost the same as that of the internal space of the second cylinder 145. The second piston 146 is movable in the up-and-down direction inside the internal space of the second cylinder 145. In the feeding part 142, a three-dimensional space surrounded by an inner surface of the second cylinder 145 and an upper surface of the second piston 146 serves as a pooling space for storing the modeling material 91 which is to be supplied to the modeling part 141. The squeegee 147 is a rodlike (e.g., substantially columnar) member extending in a horizontal direction across an upper opening of the second cylinder 145. The squeegee 147 is movable in the horizontal direction along an upper end surface of the second cylinder 145.

In the feeding part 142, the second piston 146 goes up by a predetermined distance and the modeling material 91 inside the second cylinder 145 is thereby lifted upward. Then, the squeegee 147 moves from on the second cylinder 145 to on the first cylinder 143, and the modeling material 91 protruded upward from the upper end surface of the second cylinder 145 is thereby supplied into the modeling space 140 of the modeling part 141. An upper surface of the modeling material 91 held inside the modeling space 140 is positioned at a predetermined height (for example, at the same height as that of an upper end surface of the first cylinder 143).

In the three-dimensional modeling apparatus 1, the above-described modulated beam L33 is scanned on the modeling material 91 inside the modeling space 140. With this scanning, in a surface layer portion of the modeling material 91 inside the modeling space 140, a portion irradiated with the modulated beam L33 is melted, to thereby form a portion corresponding to one layer among a plurality of layers laminated in the up-and-down direction, which are obtained by dividing the three-dimensional model. After the scan of the above-described modulated beam L33 on the modeling material 91 inside the modeling space 140 is finished, the first piston 144 goes down by the predetermined distance. After that, as described above, the modeling material 91 is supplied into the modeling space 140 from the feeding part 142 and the modulated beam L33 is scanned. In the three-dimensional modeling apparatus 1, by repeating the supply of the modeling material 91 into the modeling space 140 and the scan of the modulated beam L33 on the modeling material 91 inside the modeling space 140, the three-dimensional model is formed inside the modeling space 140.

Next, with reference to FIGs. 2 and 3, the structure of the projection optical system 23 of the optical apparatus 12 will be described. In FIG. 2, the zero-order diffracted beam L35 of the modulated beam L33 is drawn by a solid line and the first-order diffracted beam L36 is drawn by a broken line. FIG. 2 shows an optical path of the modulated beam L33 so that the short axis direction of the modulated beam L33 should coincide with a direction perpendicular to the paper. In FIG. 2, the long axis direction of the modulated beam L33 coincides with the up-and-down direction in this figure. Further, FIG. 3 shows an optical path of the modulated beam L33 so that the long axis direction of the modulated beam L33 should coincide with the direction perpendicular to the paper. In FIG. 3, the short axis direction of the modulated beam L33 coincides with the up-and-down direction in this figure. In FIG. 3, the zero-order diffracted beam L35 and the first-order diffracted beam L36 shown in FIG. 2 overlap each other.

The projection optical system 23 includes a first lens 231, a second lens 232, a third lens 233, and a light shielding unit 24. The first lens 231 and the second lens 232 are each, for example, a spherical convex lens. The third lens 233 is, for example, a cylindrical convex lens.

The second lens 232 and the third lens 233 are positioned on the forward side in the traveling direction of the modulated beam L33 (i.e., on the side toward which the modulated beam L33 goes, traveling from the optical modulator 22 to the scanning part 13), relative to the first lens 231. In the other words, the second lens 232 and the third lens 233 are positioned on the side closer to the scanning part 13, relative to the first lens 231, on the optical path of the modulated beam L33. The third lens 233 is positioned on the forward side in the traveling direction of the modulated beam L33, relative to the second lens 232. In the projection optical system 23, a modulation surface of the optical modulator 22 and the irradiated surface 131 of the scanning part 13 are optically conjugated with respect to the long axis direction and the short axis direction by the first lens 231, the second lens 232, and the third lens 233.

The light shielding unit 24 is disposed between the first lens 231 and the second lens 232 on the optical path of the modulated beam L33. The light shielding unit 24 passes the zero-order diffracted beam L35 from the optical modulator 22 therethrough and blocks the first-order diffracted beam L36. The light shielding unit 24 is disposed in the vicinity of the focus position of the zero-order diffracted beam L35 and blocks two first-order diffracted beams L36 focused on both the sides of the long axis direction of the zero-order diffracted beam L35. The first-order diffracted beam L36 blocked by the light shielding unit 24 is focused both in the long axis direction and the short axis direction. Further, the light shielding unit 24 also blocks a second or more-order (non-zero-order) diffracted beam (not shown) from the optical modulator 22.

Further, in the projection optical system 23, the kinds of the first lens 231, the second lens 232, and the third lens 233 may be changed in various ways, or an optical element other than the above-described elements may be added. Furthermore, in the actual projection optical system 23, each of the lenses and the light shielding unit 24 are disposed in proximity to each other.

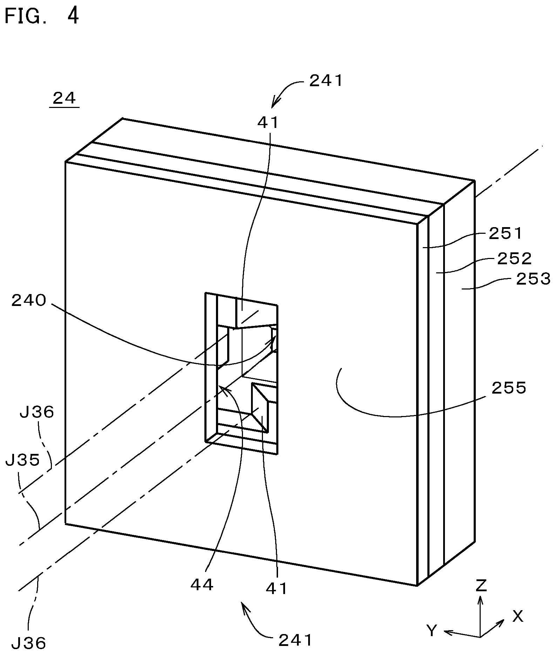

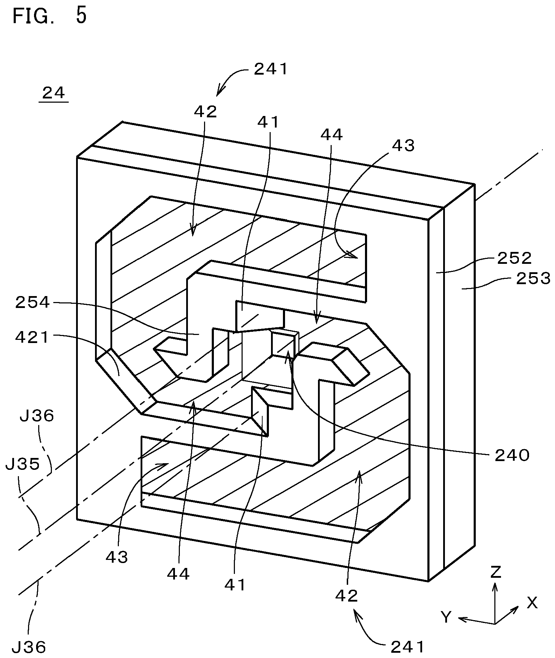

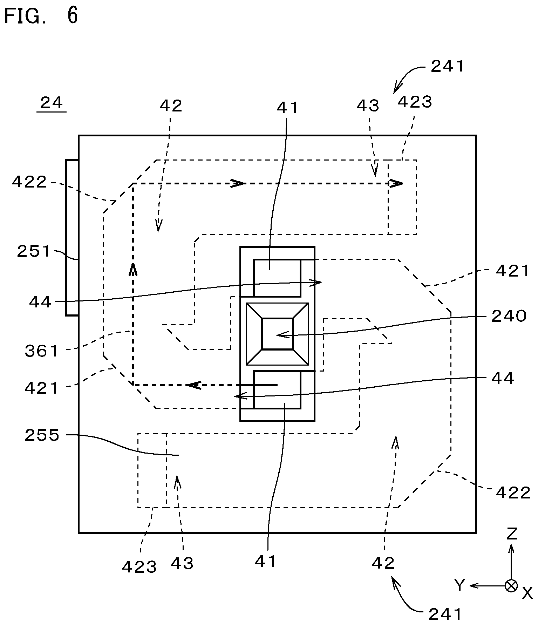

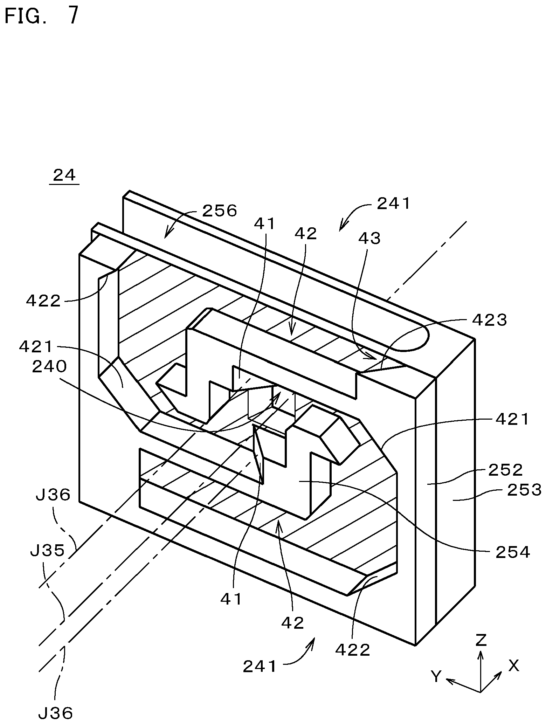

Next, with reference to FIGs. 4 to 7, the light shielding unit 24 will be described. FIG. 4 is a perspective view showing an appearance of the light shielding unit 24. FIG. 5 is a perspective view showing the inside of the light shielding unit 24. FIG. 6 is an elevational view of the light shielding unit 24. FIG. 7 is a perspective view showing the inside of the light shielding unit 24.

The light shielding unit 24 is a substantially rectangular flat plate-like structure. Respective lengths of the light shielding unit 24 in a longitudinal direction and a transverse direction are each, for example, several tens mm, and the thickness (i.e., the depth in a front view) of the light shielding unit 24 is, for example, ten several mm. At a center portion of the light shielding unit 24 in a front view, provided is a zero-order diffracted beam aperture 240 through which the zero-order diffracted beam from the optical modulator 22 (see FIG. 1) passes. The zero-order diffracted beam aperture 240 is positioned in the vicinity of the focus position of the zero-order diffracted beam on the optical axis J35 of the zero-order diffracted beam.

In FIGs. 4 and 5, the optical axis J35 of the zero-order diffracted beam is represented by a one-dot chain line. Further, in FIGs. 4 and 5, the optical axis J36 of the first-order diffracted beam is also represented by a one-dot chain line. In the following description, a direction in which the optical axis J35 of the zero-order diffracted beam extends is also referred to as an "X direction". Further, two directions perpendicular to the X direction and orthogonal to each other are also referred to as a "Y direction" and a "Z direction". The Z direction is an up-and-down direction in FIG. 4, corresponding to the above-described long axis direction. The light shielding unit 24 is a substantially flat plate-like structure extending in the Y direction and the Z direction (in other words, extending substantially perpendicular to the X direction).

To the light shielding unit 24, two first-order diffracted beams are incident from a (-X) side. The light shielding unit 24 includes two light shielding parts 241 which block the two first-order diffracted beams, respectively. Further, in the projection optical system 23, the number of first-order diffracted beams incident to the light shielding unit 24 from the optical modulator 22 is not limited to two but may be three or more. In other words, in the projection optical system 23, a plurality of first-order diffracted beams are incident to the light shielding unit 24, and the light shielding unit 24 includes a plurality of light shielding parts 241 corresponding to the plurality of first-order diffracted beams, respectively.

Each of the light shielding parts 241 includes an introductory reflection surface 41, a light guide path 42, and a light absorbing part 43. In FIGs. 5 and 7, the light absorbing part 43 is hatched. The light guide path 42 is a passage (i.e., a space) provided inside the light shielding unit 24. An introduction port 44 which is one end portion of the light guide path 42 is disposed in the vicinity of the zero-order diffracted beam aperture 240. The introductory reflection surface 41 is disposed in the vicinity of the introduction port 44 and the zero-order diffracted beam aperture 240 outside the light guide path 42. In the exemplary case shown in FIG. 5, the respective introductory reflection surfaces 41 of the two light shielding parts 241 are disposed on a (+Z) side and a (-Z) side of the zero-order diffracted beam aperture 240, respectively.

The introductory reflection surface 41 is disposed in the vicinity of the focus position of the first-order diffracted beam on the optical axis J36 of the first-order diffracted beam from the optical modulator 22. The introductory reflection surface 41 reflects the first-order diffracted beam and guides the reflected beam to the introduction port 44 of the light guide path 42. A reflection direction in which the first-order diffracted beam is reflected by the introductory reflection surface 41 is a direction deviating from an incident direction of the first-order diffracted beam to the introductory reflection surface 41 and a direction going away from the optical axis J35 of the zero-order diffracted beam. In other words, the introductory reflection surface 41 guides the first-order diffracted beam to a direction to be largely separated from the zero-order diffracted beam.

The first-order diffracted beam reflected by the introductory reflection surface 41 is incident to the inside of the light guide path 42 from the introduction port 44. The light guide path 42 is a space surrounded by a light shielding member in its circumference and extends in parallel to a YZ plane (i.e., a plane perpendicular to the optical axis J35 of the zero-order diffracted beam). The light guide path 42 guides light introduced from the introduction port 44 (hereinafter, also referred to as "introduced first-order light") to a terminal portion which is an end portion opposite to the introduction port 44 while diffusing the light along an arrow 361 of FIG. 6. The light absorbing part 43 absorbs the introduced first-order light guided by the light guide path 42 at the terminal portion of the light guide path 42.

Next, the structure of the light shielding part 241 will be described in detail. The following description will be made, paying attention to one light shielding part 241 including the introductory reflection surface 41 positioned on the (-Z) side of the zero-order diffracted beam aperture 240. The structure of the other light shielding part 241 is substantially point-symmetric with the structure of the above-described one light shielding part 241 with respect to the optical axis J35 of the zero-order diffracted beam in a front view.

In the one light shielding part 241, the introductory reflection surface 41 is a plane extending substantially in parallel to the Z direction and an inclined surface going toward an (+X) side as it goes toward a (+Y) side. A tilt angle of the introductory reflection surface 41 with respect to the X direction and a tilt angle thereof with respect to the Y direction are each about 45 degrees. The introductory reflection surface 41 is, for example, a mirror-finished surface. Herein, the mirror-finished surface refers to a reflection surface by which the incident first-order diffracted beam is substantially totally reflected without being scattered. The same applies to the light shielding units 24a and 24b described later. The first-order diffracted beam is reflected in the (+Y) direction at a substantially center portion of the introductory reflection surface 41, going toward the introduction port 44 of the light guide path 42. Substantially the total amount of first-order diffracted beam reflected by the introductory reflection surface 41 is guided to the introduction port 44 and introduced to the inside of the light guide path 42.

The light guide path 42 extends while bending in the circumference of the zero-order diffracted beam aperture 240, so as to surround the zero-order diffracted beam aperture 240. Specifically, the light guide path 42 extends from the (-Z) side of the zero-order diffracted beam aperture 240 toward the (+Y) direction, bends substantially at right angle and extends in the (+Z) direction, bends substantially at right angle and extends in the (-Y) direction, passes through the (+Z) side of the zero-order diffracted beam aperture 240, and extends up to a (-Y) side, relative to the zero-order diffracted beam aperture 240. In the light shielding unit 24, the two light guide paths 42 surround the zero-order diffracted beam aperture 240 along substantially the entire circumference thereof.

Inside the light guide path 42, provided are a first internal reflection surface 421, a second internal reflection surface 422, and a third internal reflection surface 423. The first internal reflection surface 421 is disposed at a portion where the light guide path 42 is bent on the (+Y) side of the introductory reflection surface 41. The second internal reflection surface 422 is disposed at a portion where the light guide path 42 is bent on the (+Z) side of the first internal reflection surface 421. The third internal reflection surface 423 is disposed at the terminal portion of the light guide path 42 on the (-Y) side of the second internal reflection surface 422. The introduced first-order light which is reflected by the introductory reflection surface 41 and introduced into the light guide path 42 is reflected by the first internal reflection surface 421, the second internal reflection surface 422, and the third internal reflection surface 423 in this order and guided to the light absorbing part 43.

The first internal reflection surface 421 is a plane extending substantially in parallel to the X direction and an inclined surface going toward the (+Z) side as it goes toward the (+Y) side. A tilt angle of the first internal reflection surface 421 with respect to the Y direction and a tilt angle thereof with respect to the Z direction are each about 45 degrees. The introduced first-order light going from the introductory reflection surface 41 toward the (+Y) direction is directly incident to the first internal reflection surface 421 not via any reflection surface. The introduced first-order light incident to the first internal reflection surface 421 from the introductory reflection surface 41 is reflected by the first internal reflection surface 421 toward the (+Z) direction and goes toward the second internal reflection surface 422. The second internal reflection surface 422 is a plane extending substantially in parallel to the X direction and an inclined surface going toward the (+Z) side as it goes toward the (-Y) side. A tilt angle of the second internal reflection surface 422 with respect to the Y direction and a tilt angle thereof with respect to the Z direction are each about 45 degrees. The introduced first-order light incident to the second internal reflection surface 422 from the first internal reflection surface 421 is reflected by the second internal reflection surface 422 toward the (-Y) direction and goes toward the third internal reflection surface 423.

The third internal reflection surface 423 is a plane extending substantially in parallel to the Z direction and an inclined surface going toward the (+X) side as it goes toward the (-Y) side. A tilt angle of the third internal reflection surface 423 with respect to the X direction and a tilt angle thereof with respect to the Y direction are each about 45 degrees. The introduced first-order light incident to the third internal reflection surface 423 from the second internal reflection surface 422 is reflected by the third internal reflection surface 423 toward the (+X) direction and goes toward the light absorbing part 43 which is a side surface of the light guide path 42 on the (+X) side. As described above, since the light guide path 42 is surrounded by the light shielding member, it is possible to prevent the introduced first-order light going toward the light absorbing part 43 from the introduction port 44 from leaking out from the light guide path 42 to the outside of the light shielding unit 24.

The light absorbing part 43 is a plane substantially perpendicular to the X direction and has a surface provided with a light absorbing film thereon. The light absorbing film may be a film-like or sheet-like member formed of a material which easily absorbs light, or may be a coating film formed by applying thereto a material which easily absorbs light. To the light absorbing part 43, the introduced first-order light reflected by the third internal reflection surface 423 is emitted. In other words, the light absorbing part 43 includes an irradiated surface onto which the introduced first-order light passing through the light guide path 42 is emitted. In the light absorbing part 43, the introduced first-order light from the light guide path 42 is absorbed by using the light absorbing film.

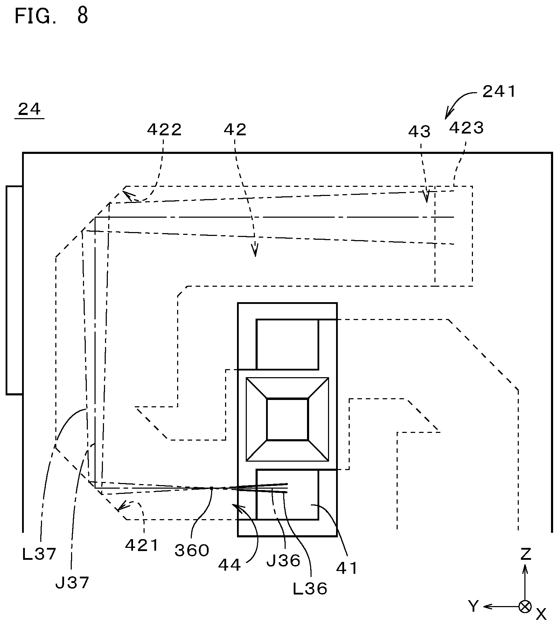

FIG. 8 is an elevational view showing the above-described one light shielding part 241 which is enlarged. In FIG. 8, the first-order diffracted beam L36 incident to the introductory reflection surface 41 is drawn by a solid line and the optical axis J36 of the first-order diffracted beam L36 is drawn by a one-dot chain line. Further, in FIG. 8, introduced first-order light L37 in a case where there occurs no scattering or the like in the first internal reflection surface 421, the second internal reflection surface 422, or the third internal reflection surface 423 is drawn by a two-dot chain line and an optical axis J37 of the introduced first-order light L37 is drawn by a one-dot chain line.

As described above, the introductory reflection surface 41 is disposed in the vicinity of the focus position 360 of the first-order diffracted beam L36. In the exemplary case shown in FIG. 8, the introductory reflection surface 41 is disposed on a frontward side of the focus position 360 of the first-order diffracted beam L36 on the optical axis J36 of the first-order diffracted beam L36 (i.e., on the side of the optical modulator 22 on the optical axis J36 of the first-order diffracted beam L36). Then, the first-order diffracted beam L36 reflected by the introductory reflection surface 41 is focused on the focus position 360 between the introductory reflection surface 41 and the first internal reflection surface 421. In other words, the focus position 360 of the first-order diffracted beam L36 is positioned between the introductory reflection surface 41 and the first internal reflection surface 421. The focus position 360 of the first-order diffracted beam L36 may be positioned between the introductory reflection surface 41 and the introduction port 44 of the light guide path 42 (i.e., outside the light guide path 42) or may be positioned between the introduction port 44 and the first internal reflection surface 421 (i.e., inside the light guide path 42). Alternatively, the focus position 360 of the first-order diffracted beam L36 may be positioned on the introduction port 44.

The introduced first-order light L37 introduced from the introduction port 44 and going toward the first internal reflection surface 421 passes the above-described focus position 360 and goes toward the (+Y) direction inside the light guide path 42 while enlarging the area of a cross section perpendicular to the optical axis J37 (i.e., while being diffused). Then, also after being reflected by the first internal reflection surface 421, while being diffused substantially in the same manner, the introduced first-order light L37 goes through the second internal reflection surface 422 and the third internal reflection surface 423 and is guided to the light absorbing part 43. For this reason, an irradiation area of the introduced first-order light L37 on the light absorbing part 43 increases and the power density of the introduced first-order light L37 is reduced. As a result, it is possible to suppress the temperature rise of the light absorbing part 43 (especially, a local temperature rise in a region to which the introduced first-order light L37 is emitted).

In the light absorbing part 43, in order to further increase the irradiation area of the introduced first-order light L37, the surface provided with the light absorbing film (i.e., the surface on the (-X) side) may have projections and depressions where there are projections or depressions in the X direction. The height of the projections and depressions (i.e., the height in the X direction) is, for example, about several mm. The light absorbing film is provided along the projections and depressions. With such a structure in which the surface provided with the light absorbing film is an uneven surface (a projected and depressed surface), the irradiation area of the introduced first-order light L37 further increases and the temperature rise of the light absorbing part 43 can be further suppressed.

Further, in order to still further increase the irradiation area of the introduced first-order light L37 in the light absorbing part 43, the first internal reflection surface 421, the second internal reflection surface 422, and the third internal reflection surface 423 may be each provided with fine unevenness (fine projections and depressions). In this case, the introduced first-order light L37 incident to the first internal reflection surface 421, the second internal reflection surface 422, and the third internal reflection surface 423 is reflected while being scattered, and the introduced first-order light L37 going inside the light guide path 42 toward the light absorbing part 43 is further diffused. In other words, in the light shielding unit 24, with such a structure in which the first internal reflection surface 421, the second internal reflection surface 422, and the third internal reflection surface 423 each serve as a scattering reflection surface, diffusion of the introduced first-order light L37 going inside the light guide path 42 is promoted and the irradiation area of the introduced first-order light L37 in the light absorbing part 43 is further enlarged. As a result, the temperature rise of the light absorbing part 43 can be further suppressed.

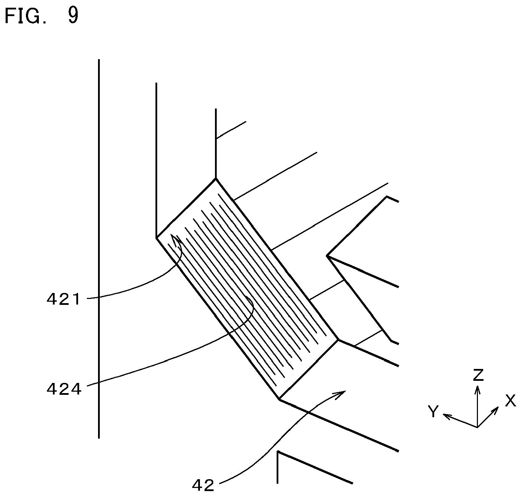

FIG. 9 is a perspective view showing the first internal reflection surface 421 provided with a fine unevenness 424, which is enlarged. In the exemplary case shown in FIG. 9, the fine unevenness 424 is a linear unevenness extending in the Y direction and the Z direction along the first internal reflection surface 421 (i.e., a hairline going toward the (+Z) side as it goes toward the (+Y) side). In other words, the fine unevenness 424 is the linear unevenness extending along a plane in parallel to both a direction (i.e., the Y direction) in which the light guide path 42 extends toward the first internal reflection surface 421 and a direction (i.e., the Z direction) in which the light guide path 42 extends from the first internal reflection surface 421. More in other words, the fine unevenness 424 is the linear unevenness extending along a plane in parallel to both a depth direction (i.e., the Y direction) up to the first internal reflection surface 421 and a depth direction (i.e., the Z direction) from the first internal reflection surface 421 in the light guide path 42. On the first internal reflection surface 421, arranged are many linear fine projections and depressions (unevenness) 424 described above in a direction substantially perpendicular to a longitudinal direction. The height of the fine unevenness 424 on the first internal reflection surface 421 (i.e., the amount of projection or the amount of depression from a surrounding portion) is, for example, about several µm.

The introduced first-order light L37 incident to the first internal reflection surface 421 (see FIG. 8) is scattered mainly in the X direction by the linear fine unevenness 424 and is hardly scattered in a direction (i.e., the (-Y) direction) returning to an incident side where the introduced first-order light L37 is incident to the first internal reflection surface 421. Therefore, it is possible to suppress the reflected light from the first internal reflection surface 421 from returning to the introduction port 44 and leaking out from the light guide path 42 while further enlarging a cross-sectional area of the introduced first-order light L37 reflected by the first internal reflection surface 421.

The fine unevenness provided on the second internal reflection surface 422 is, for example, a linear unevenness extending in the Y direction and the Z direction along the second internal reflection surface 422 (i.e., going toward the (+Z) side as it goes toward the (-Y) side). For this reason, the introduced first-order light L37 incident to the second internal reflection surface 422 is scattered mainly in the X direction and is hardly scattered in a direction (i.e., the (-Z) direction) returning to an incident side where the introduced first-order light L37 is incident to the second internal reflection surface 422. Therefore, it is possible to suppress the reflected light from the second internal reflection surface 422 from returning to the introduction port 44 and leaking out from the light guide path 42 while further enlarging the cross-sectional area of the introduced first-order light L37 reflected by the second internal reflection surface 422.

The fine unevenness provided on the third internal reflection surface 423 is, for example, a linear unevenness extending in the X direction and the Y direction along the third internal reflection surface 423 (i.e., going toward the (+X) side as it goes toward the (-Y) side). For this reason, the introduced first-order light L37 incident to the third internal reflection surface 423 is scattered mainly in the Z direction and is hardly scattered in a direction (i.e., the (+Y) direction) returning to an incident side where the introduced first-order light L37 is incident to the third internal reflection surface 423. Therefore, it is possible to suppress the reflected light from the third internal reflection surface 423 from returning to the introduction port 44 and leaking out from the light guide path 42 while further enlarging the cross-sectional area of the introduced first-order light L37 reflected by the third internal reflection surface 423.

In the case where the first internal reflection surface 421, the second internal reflection surface 422, and the third internal reflection surface 423 each serve as the scattering reflection surface, part of the introduced first-order light L37 may be incident to the light absorbing part 43 and absorbed therein before reaching the third internal reflection surface 423. Further, in the light shielding unit 24, all the first internal reflection surface 421, the second internal reflection surface 422, and the third internal reflection surface 423 do not necessarily need to serve as the scattering reflection surface. With a structure in which one or more internal reflection surfaces out of the first internal reflection surface 421, the second internal reflection surface 422, and the third internal reflection surface 423 serve as the scattering reflection surface, as described above, it is possible to further suppress the temperature rise of the light absorbing part 43.

Further, in the light shielding unit 24, the introductory reflection surface 41 may serve as the scattering reflection surface. In this case, it is preferable that 86.5 % or more of light reflected by the introductory reflection surface 41 on the light amount basis should be guided to the introduction port 44 and introduced to the inside of the light guide path 42, and it is further preferable that substantially the total amount of light should be guided to the introduction port 44 and introduced to the inside of the light guide path 42. With such a structure in which the introductory reflection surface 41 serves as the scattering reflection surface, substantially in the same manner as described above, it is possible to enlarge the cross-sectional area of the introduced first-order light L37 and further suppress the temperature rise of the light absorbing part 43. Further, when the light reflected by the introductory reflection surface 41 and diffused is incident to the first internal reflection surface 421, it is preferable that the entire cross section of the incident light should be smaller than the first internal reflection surface 421 and substantially the total amount of incident light should be incident to the first internal reflection surface 421.

As shown in FIG. 4, the light shielding unit 24 includes a first member 251, a second member 252, and a third member 253. In FIG. 5 and 7, the first member 251 is not shown. Further, in FIG. 7, respective upper end portions of the second member 252 and the third member 253 are not shown. The first member 251 and the third member 253 are each a substantially rectangular flat plate-like member provided with a through hole corresponding to the zero-order diffracted beam aperture 240 at its center portion. The second member 252 is a substantially rectangular frame-like member provided with a barrier rib 254 forming the light guide path 42 thereinside. The first member 251, the second member 252, and the third member 253 are aligned in this order from the (-X) side (i.e., the frontward side of an optical axis direction which is a direction in which the optical axis J35 of the zero-order diffracted beam extends) on the optical axis J35 of the zero-order diffracted beam, and fixed to one another, to thereby form the light shielding unit 24.

The first member 251, the second member 252, and the third member 253 are light shielding members which light from the optical modulator 22 cannot permeate. A gap of the second member 252 is closed by the first member 251 and the third member 253 from both the sides in the X direction, and the light guide path 42 surrounded by the light shielding member is thereby formed. The first member 251, the second member 252, and the third member 253 are each formed of a material which easily reflects the light from the optical modulator 22 and has relatively high thermal conductivity. The first member 251, the second member 252, and the third member 253 are each formed of, for example, copper (Cu). Further, the above-described introductory reflection surface 41 or the like may be provided with a thin film of gold (Au). Furthermore, the respective materials of the first member 251, the second member 252, and the third member 253 may be changed as appropriate.

The first member 251 is, for example, a member provided with a through hole at a center portion of a substantially flat plate-like copper plate extending in the Y direction and the Z direction. The through hole corresponds to the above-described zero-order diffracted beam aperture 240 and exposes the introductory reflection surface 41 of each light shielding part 241 on the (-X) side of the light shielding unit 24. A main surface of the first member 251 on the (-X) side is a substantial plane extending substantially perpendicular to the X direction (i.e., extending in a direction substantially perpendicular to the optical axis J35 of the zero-order diffracted beam) and provided with a light absorbing film. The light absorbing film may be a film-like or sheet-like member formed of a material which easily absorbs light, or may be a coating film formed by applying thereto a material which easily absorbs light.

On the main surface of the first member 251 on the (-X) side, a second-order diffracted beam or a third or more-order diffracted beam from the optical modulator 22 is incident to the (+Z) side and the (-Z) side of the above-described through hole and absorbed by the above-described light absorbing film. Thus, on the main surface of the first member 251 on the (-X) side (i.e., on an outer surface of the light shielding unit 24 on the (-X) side), provided is a secondary light absorption part 255 for absorbing a high-order diffracted beam such as a second-order diffracted beam or the like in a circumference of the zero-order diffracted beam aperture 240 and the introductory reflection surface 41.

The second member 252 is, for example, one cutting block formed by performing cutting processing on a substantially flat plate-like copper plate extending in the Y direction and the Z direction. In the second member 252, formed is a gap which is to be the above-described light guide path 42. Further, on the second member 252, formed are the introductory reflection surface 41, the first internal reflection surface 421, the second internal reflection surface 422, and the third internal reflection surface 423. The fine unevenness 424 of the first internal reflection surface 421 (see FIG. 9) is formed, for example, by performing hairline finish during the cutting processing on the second member 252. It is thereby possible to reduce the time required to manufacture the second member 252, as compared with a case where after the cutting processing of the second member 252 is finished, the fine unevenness is formed on the first internal reflection surface 421 by sandblasting or the like.

The third member 253 is, for example, a member provided with a through hole at a center portion of a substantially flat plate-like copper plate extending in the Y direction and the Z direction. The through hole corresponds to the above-described zero-order diffracted beam aperture 240. A main surface of the third member 253 on the (-X) side (i.e., a main surface facing the light guide path 42) is the light absorbing part 43 provided with the light absorbing film, as described above.

In the light shielding unit 24, the light absorbing film may be also provided on a main surface of the first member 251 on the (+X) side (i.e., a main surface facing the light guide path 42). Alternatively, the main surface of the first member 251 on the (+X) side may be a reflection surface. Like the second member 252, the first member 251 and the third member 253 may be also formed by cutting processing.

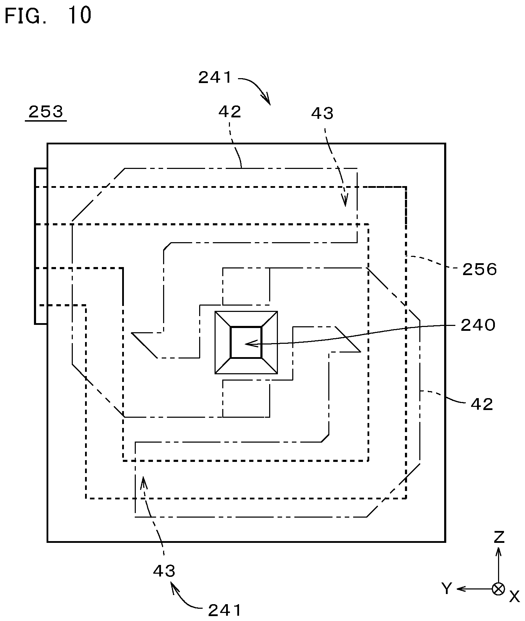

FIG. 10 is an elevational view of the third member 253. In FIG. 10, the above-described light guide path 42 is also represented by a two-dot chain line. Inside the third member 253, a cooling channel 256 is provided. The cooling channel 256 is disposed in the vicinity of the light absorbing part 43 (i.e., the main surface of the third member 253 on (-X) side). Inside the cooling channel 256, a coolant such as water or the like flows. It is thereby possible to further suppress the temperature rise of the light absorbing part 43. Further, the vicinity of the light absorbing part 43 described above refers to a range in which the light absorbing part 43 can be effectively cooled by the coolant flowing in the cooling channel 256.

Furthermore, it is preferable that the cooling channel 256 should overlap the light guide path 42 of each light shielding part 241 in a front view. Thus, by disposing the cooling channel 256 also in the vicinity of the light guide path 42, even in the case where there occurs a temperature rise due to the scattering of the introduced first-order light or the like in the light guide path 42, it is possible to efficiently suppress the temperature rise. Further, the vicinity of the light guide path 42 described above refers to a range in which the light guide path 42 can be effectively cooled by the coolant flowing in the cooling channel 256. In the light shielding unit 24, there may be a configuration where a temperature sensor is disposed in the vicinity of the cooling channel 256 and the respective temperatures of the light absorbing part 43 and the light guide path 42 are measured. It is thereby possible to easily detect an abnormal temperature rise of the light shielding unit 24.

As described above, the optical apparatus 12 includes the illumination optical system 21, the optical modulator 22, and the projection optical system 23. The illumination optical system 21 collimates the laser beam emitted from the laser light source 11 into a predetermined shape. The optical modulator 22 modulates the laser beam collimated by the illumination optical system 21 into the modulated beam L33. The projection optical system 23 guides the modulated beam L33 to the target object (the scanning part 13 in the above-described exemplary case). The projection optical system 23 includes the light shielding unit 24 which passes the zero-order diffracted beam L35 from the optical modulator 22 therethrough and blocks the first-order diffracted beam L36.

The light shielding unit 24 includes the zero-order diffracted beam aperture 240, the introductory reflection surface 41, the light guide path 42, and the light absorbing part 43. The zero-order diffracted beam aperture 240 is positioned in the vicinity of the focus position of the zero-order diffracted beam L35 on the optical axis J35 of the zero-order diffracted beam L35, and passes the zero-order diffracted beam L35 therethrough. The introductory reflection surface 41 is positioned in the vicinity of the focus position 360 of the first-order diffracted beam L36 on the optical axis J36 of the first-order diffracted beam L36 and in the vicinity of the zero-order diffracted beam aperture 240. The introductory reflection surface 41 reflects the first-order diffracted beam L36 toward the direction deviating from the incident direction of the first-order diffracted beam L36 and going away from the optical axis J35 of the zero-order diffracted beam L35. The light guide path 42 has the introduction port 44 to which the light from the introductory reflection surface 41 is incident and guides the light (i.e., the introduced first-order light) introduced from the introduction port 44. The circumference of the light guide path 42 is surrounded by the light shielding member. The light absorbing part 43 absorbs the light guided while being diffused by the light guide path 42.

In the light shielding unit 24, by guiding the introduced first-order light to the light absorbing part 43 by the light guide path 42 surrounded by the light shielding member, it is possible to suppress leakage of the light from the light shielding unit 24 to the outside. Further, by guiding the introduced first-order light to the light absorbing part 43 while diffusing the introduced first-order light in the light guide path 42, even in the case where the power density of the laser beam emitted from the laser light source 11 is high, it is possible to reduce the power density of the introduced first-order light to be emitted to the light absorbing part 43. As a result, it is possible to suppress the temperature rise of the light shielding unit 24 due to light absorption in the light absorbing part 43 and possible to prevent or suppress the temperature rise of the optical elements or the like in the circumference of the light shielding unit 24. Further, since the absorbance required of the light absorbing part 43 can be reduced, it is possible to increase the degree of freedom in selection of the light absorbing film to be used in the light absorbing part 43. Therefore, by using a relatively cheap and long-lived light absorbing film, instead of an expensive and short-lived light absorbing film having very high absorbance, it is possible to achieve reduction in the manufacturing cost and a long life of the light shielding unit 24.

As described above, it is preferable that the introductory reflection surface 41 should be a mirror-finished surface. Since scattering of the first-order diffracted beam L36 in the introductory reflection surface 41 is thereby prevented, it is possible to prevent or suppress the temperature rise on the frontward side of the light guide path 42 (i.e., on the side of the optical modulator 22 along the optical axis J36 of the first-order diffracted beam L36). Further, substantially the total amount of first-order diffracted beam L36 incident to the introductory reflection surface 41 can be introduced to the inside of the light guide path 42. Therefore, it is possible to prevent or suppress the temperature rise of the optical elements or the like in the circumference of the light shielding unit 24. Furthermore, as described above, it is preferable that the light guide path 42 should include the scattering reflection surface therein (for example, the first internal reflection surface 421) which reflects and guides the light from the introductory reflection surface 41 while scattering the light. It is thereby possible to promote diffusion of the introduced first-order light inside the light guide path 42.

The above-described scattering reflection surface (for example, the first internal reflection surface 421) preferably has the linear fine unevenness 424 extending along a plane in parallel to both the depth direction up to the scattering reflection surface and the depth direction from the scattering reflection surface in the light guide path 42. It is thereby possible to suppress the introduced first-order light reflected by the scattering reflection surface from returning toward the incident direction and possible to scatter the introduced first-order light by the scattering reflection surface. As a result, it is possible suitably promote diffusion of the introduced first-order light inside the light guide path 42.

As described above, preferably, the introductory reflection surface 41 is disposed on the frontward side of the focus position 360 of the first-order diffracted beam L36 on the optical axis J36 of the first-order diffracted beam L36. It is thereby possible to reduce the power density of the first-order diffracted beam L36 on the introductory reflection surface 41, as compared with the case where the introductory reflection surface 41 is disposed at the focus position 360. As a result, it is possible to suppress the temperature rise, the damage, or the like of the introductory reflection surface 41.

Further, preferably, in the light guide path 42, the first-order diffracted beam L36 is focused between the reflection surface (i.e., the first internal reflection surface 421) to which the light from the introductory reflection surface 41 is directly incident and the introductory reflection surface 41. It is thereby possible to reduce the power density of the introduced first-order light on the first internal reflection surface 421, as compared with the case where the focus position 360 is disposed on the first internal reflection surface 421. As a result, it is possible to suppress the temperature rise, the damage, or the like of the first internal reflection surface 421. Furthermore, it is thereby possible to increase the degree of diffusion of the introduced first-order light at the point in time when the introduced first-order light reaches the light absorbing part 43, as compared with the case where the focus position 360 is disposed on the side of the light absorbing part 43 relative to the first internal reflection surface 421 (for example, between the first internal reflection surface 421 and the second internal reflection surface 422). As a result, it is possible to reduce the power density of the introduced first-order light to be emitted to the light absorbing part 43 and possible to suppress the temperature rise of the light shielding unit 24. Moreover, it is also possible to reduce the cross-sectional area of the light passing through the introduction port 44. As a result, it is possible to suppress upsizing of the introduction port 44 and the light shielding unit 24.

Further, in the light shielding unit 24, the introductory reflection surface 41 may be disposed at the focus position 360 of the first-order diffracted beam L36. In this case, it is possible to reduce the area of the introductory reflection surface 41. Furthermore, since a gap between the first-order diffracted beam L36 and the zero-order diffracted beam L35 increases, it is possible to easily separate the first-order diffracted beam L36 from the zero-order diffracted beam L35.

The introductory reflection surface 41 may be disposed on the backward side of the focus position 360 of the first-order diffracted beam L36 on the optical axis J36 of the first-order diffracted beam L36 (i.e., on a side opposite to the optical modulator 22 with the focus position 360 interposed therebetween on the optical axis J36 of the first-order diffracted beam L36. In this case, it is possible to reduce the power density of the first-order diffracted beam L36 on the introductory reflection surface 41. As a result, it is possible to suppress the temperature rise, the damage, or the like of the introductory reflection surface 41. Further, it is possible to reliably avoid the introduced first-order light introduced from the introductory reflection surface 41 to the light guide path 42 from being focused on any one reflection surface inside the light guide path 42. Therefore, it is possible to suppress the temperature rise, the damage, or the like of each reflection surface inside the light guide path 42.

As described above, it is preferable that the light absorbing part 43 should include the uneven surface on which the light absorbing film is provided on its surface. It is thereby possible to increase the irradiation area of the introduced first-order light on the light absorbing part 43, and possible to reduce the power density of the introduced first-order light to be emitted to the light absorbing part 43. As a result, it is possible to further suppress the temperature rise of the light shielding unit 24.

As described above, it is preferable that the light shielding unit 24 should further include the cooling channel 256 disposed in the vicinity of the light absorbing part 43, inside which a coolant flows. It is thereby possible to cool the light absorbing part 43 and further suppress the temperature rise of the light shielding unit 24. Further, it is preferable that the cooling channel 256 inside which the coolant flows should be disposed also in the vicinity of the light guide path 42. It is thereby possible to also cool the light guide path 42 and still further suppress the temperature rise of the light shielding unit 24.

As described above, it is preferable that in the light shielding unit 24, the secondary light absorption part 255 which absorbs the second-order diffracted beam from the optical modulator 22 should be provided on an outer surface extending in a direction perpendicular to the optical axis J35 of the zero-order diffracted beam L35 in the circumference of the zero-order diffracted beam aperture 240 and the introductory reflection surface 41. It is thereby possible to suppress upsizing of the light shielding unit 24 and block the second or more-order (non-zero-order) diffracted beam.

As described above, it is preferable that the light guide path 42 should extend in parallel to a plane perpendicular to the optical axis J35 of the zero-order diffracted beam L35. It is thereby possible to achieve size reduction of the light shielding unit 24 in a direction in which the optical axis J35 extends.

As described above, it is preferable that the light guide path 42 should extend while bending in the circumference of the zero-order diffracted beam aperture 240, so as to surround the zero-order diffracted beam aperture 240. It is thereby possible to achieve size reduction of the light shielding unit 24 in a front view (i.e., as viewed along the optical axis J35 of the zero-order diffracted beam L35).

As described above, it is preferable that the introductory reflection surface 41 and the light guide path 42 (at least part of the member surrounding the light guide path 42 in its circumference) should be provided in one cutting block formed by cutting processing (the second member 252 in the above-described exemplary case). It is thereby possible to manufacture the light shielding unit 24 in a state where the relative position of the introductory reflection surface 41 and the light guide path 42 is maintained with high accuracy.

The above-described three-dimensional modeling apparatus 1 includes the optical apparatus 12, the laser light source 11, and the scanning part 13 described above. The laser light source 11 emits the laser beam L31 to the optical apparatus 12. The scanning part 13 is the above-described target object irradiated with the modulated beam L33 from the optical apparatus 12 and scans the modulated beam L33 on the modeling material 91. In the optical apparatus 12, as described above, since the temperature rise of the light shielding unit 24 can be suppressed, it is possible to suitably increase the power density of the modulated beam L33 to be emitted to the target object (i.e., the scanning part 13) while suppressing the temperature rise of the optical elements. Therefore, in the three-dimensional modeling apparatus 1, it is possible to suitably increase the power density of the modulated beam L33 to be emitted to the modeling material 91. As a result, it is possible to increase the modeling speed of a modeled object in the three-dimensional modeling apparatus 1 and increase the productivity.

Next, an optical apparatus in accordance with the second preferred embodiment of the present invention will be described. The optical apparatus of the second preferred embodiment has the same configuration as the optical apparatus 12 shown in FIGs. 1 to 3 except that a light shielding unit 24a having a structure different from that of the above-described light shielding unit 24 is provided. In the following description, as to the constitution of the optical apparatus of the second preferred embodiment, the constituent elements identical to those in the above-described optical apparatus 12 are represented by the same reference signs.

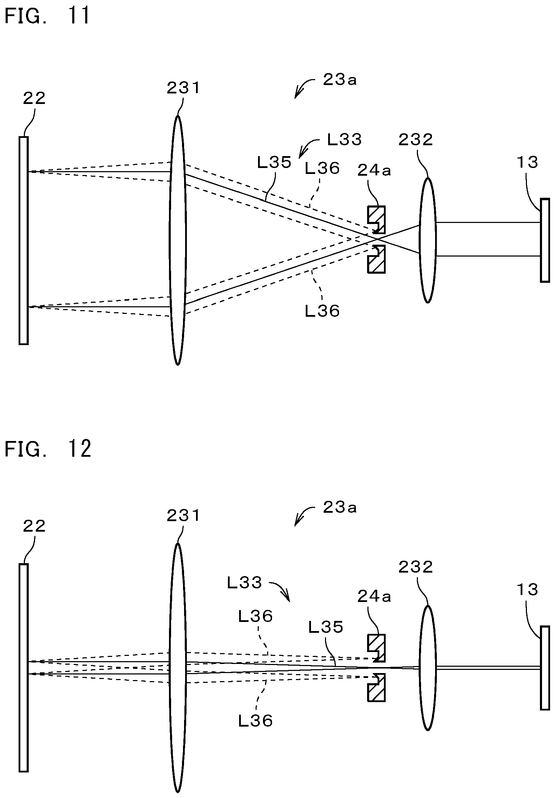

FIGs. 11 and 12 are views each showing a structure of a projection optical system 23a provided with the light shielding unit 24a, which correspond to FIGs. 2 and 3, respectively. Specifically, in FIG. 11, the direction perpendicular to the paper corresponds to the short axis direction of the modulated beam L33, and the up-and-down direction of this figure corresponds to the long axis direction of the modulated beam L33. Further, in FIG. 12, the direction perpendicular to the paper corresponds to the long axis direction of the modulated beam L33, and the up-and-down direction of this figure corresponds to the short axis direction of the modulated beam L33.

The optical modulator 22 is, for example, a two-dimensional spatial light modulating element. As the optical modulator 22, for example, a PLV (Planar Light Valve), an LPLV (Liner Planar Light Valve), a DMD (Digital Micromirror Device), or the like can be used.

The light shielding unit 24a is disposed between the first lens 231 and the second lens 232 on the optical path of the modulated beam L33. The light shielding unit 24a passes the zero-order diffracted beam L35 from the optical modulator 22 therethrough and blocks the first-order diffracted beam L36. The light shielding unit 24a is disposed in the vicinity of the focus position of the zero-order diffracted beam L35 and blocks four first-order diffracted beams L36 focused on both the sides of the long axis direction and both the sides of the short axis direction of the zero-order diffracted beam L35. The first-order diffracted beam L36 blocked by the light shielding unit 24a is focused both in the long axis direction and the short axis direction. Further, the light shielding unit 24a also blocks a second or more-order (non-zero-order) diffracted beam (not shown) from the optical modulator 22.

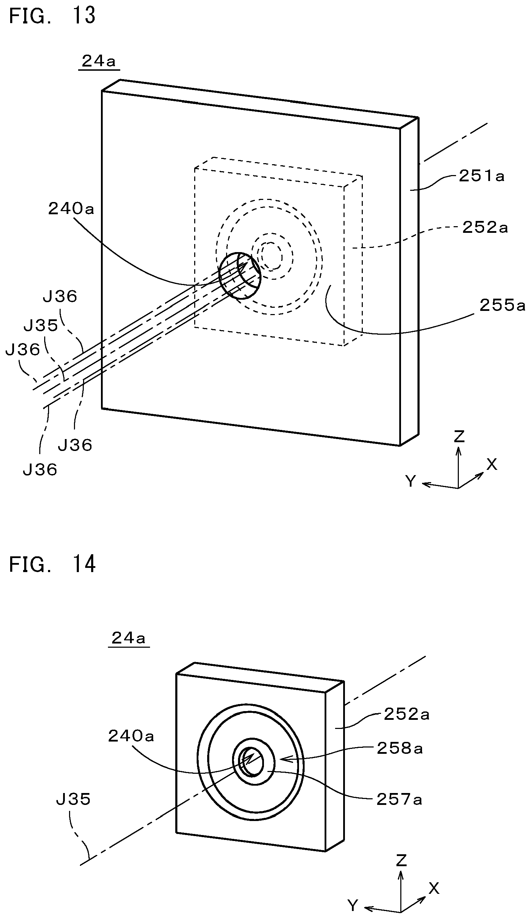

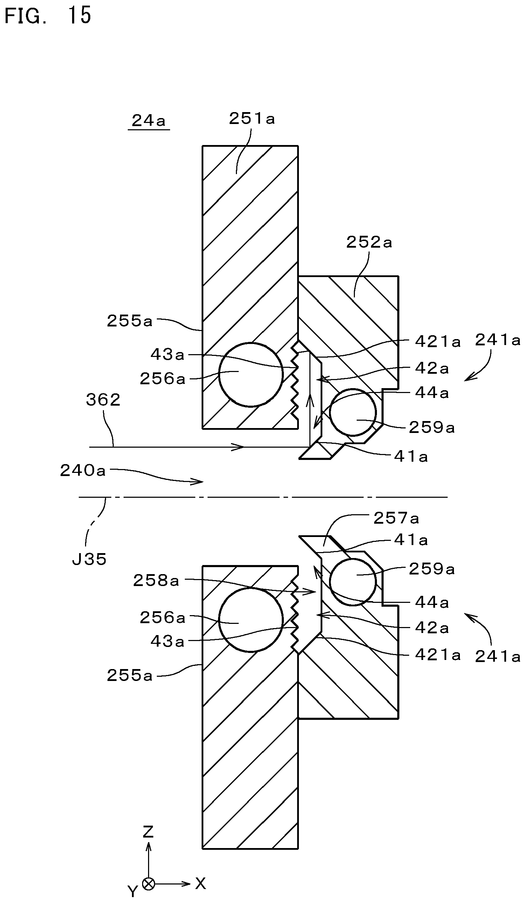

Next, with reference to FIGs. 13 to 15, the light shielding unit 24a will be described. FIG. 13 is a perspective view showing an appearance of the light shielding unit 24a. FIG. 14 is a perspective view showing the inside of the light shielding unit 24a. FIG. 15 is a longitudinal section of the light shielding unit 24a in a cross section going through the optical axis J35 of the zero-order diffracted beam from the optical modulator 22. The light shielding unit 24a includes a zero-order diffracted beam aperture 240a through which the zero-order diffracted beam passes. Like the above-described zero-order diffracted beam aperture 240 (see FIG. 4), the zero-order diffracted beam aperture 240a is positioned in the vicinity of the focus position of the zero-order diffracted beam on the optical axis J35 of the zero-order diffracted beam.

The light shielding unit 24a includes a first member 251a and a second member 252a. In FIG. 14, the first member 251a is not shown. The first member 251a and the second member 252a are each a substantially rectangular flat plate-like member provided with a substantially circular through hole corresponding to the zero-order diffracted beam aperture 240a at its center portion. The first member 251a and the second member 252a are aligned in this order from the (-X) side (i.e., the frontward side of the optical axis direction which is a direction in which the optical axis J35 of the zero-order diffracted beam extends) on the optical axis J35 of the zero-order diffracted beam, and fixed to each other, to thereby form the light shielding unit 24a.

The first member 251a and the second member 252a are light shielding members which light from the optical modulator 22 cannot permeate. The respective materials of the first member 251a and the second member 252a are, for example, the same as those of the first member 251, the second member 252, and the third member 253 of the above-described light shielding unit 24. The second member 252a is, for example, one cutting block formed by performing cutting processing. The first member 251a may be also formed by performing cutting processing.

On a main surface of the second member 252a on the (-X) side (i.e., on the side of the optical modulator 22 in the direction in which the optical axis J35 of the zero-order diffracted beam extends), provided are an annular inner projection 257a and an annular depression 258a. The inner projection 257a is provided along a periphery of the through hole (i.e., the through hole corresponding to the zero-order diffracted beam aperture 240a) at the center portion of the second member 252. The inner projection 257a is projected from the main surface on the (-X) side of the second member 252 toward the (-X) side.

The annular depression 258a is an annular depression extending radially outward continuously from an outer peripheral edge of the inner projection 257a in a radial direction around the optical axis J35 of the zero-order diffracted beam (hereinafter, also referred to simply as a "radial direction"). The annular depression 258a is depressed toward the (+X) side, as compared with the inner projection 257a and a portion outside the annular depression 258a in the radial direction. In the exemplary case shown in FIG. 14, the inner projection 257a and the annular depression 258a are substantially annular, which are disposed concentrically around the optical axis J35 of the zero-order diffracted beam in a front view.

The inner projection 257a has a shape in which a substantially columnar through hole is provided at a center portion of a substantially truncated cone around the optical axis J35. A side surface outside the inner projection 257a in the radial direction (i.e., an inner peripheral surface which is a side surface inside the annular depression 258a in the radial direction) is an introductory reflection surface 41a which corresponds to the above-described introductory reflection surface 41. The introductory reflection surface 41a is positioned in the vicinity of the zero-order diffracted beam aperture 240a and surrounds a circumference of the zero-order diffracted beam aperture 240a. The introductory reflection surface 41a is a substantially annular circumferential inclined surface around the optical axis J35 (i.e., a surface having a substantially truncated cone side-surface shape). The introductory reflection surface 41a goes toward the (+X) side as it goes outward in the radial direction. In other words, the introductory reflection surface 41a goes away from the optical axis J35 as it goes from the frontward side toward the backward side in the direction in which the optical axis J35 of the zero-order diffracted beam extends (i.e., the optical axis direction). The introductory reflection surface 41a is, for example, a mirror-finished surface. Further, the introductory reflection surface 41a may be a scattering reflection surface.

The annular depression 258a is closed from the (-X) side by the first member 251a having the through hole at its center portion, to thereby become a light guide path 42a which corresponds to the above-described light guide path 42. The light guide path 42a is a substantially annular space extending radially outward in the radial direction around the optical axis J35 of the zero-order diffracted beam and surrounded by the light shielding member. The above-described through hole of the first member 251 has a substantially circular shape having a diameter larger than that of the inner projection 257a in a front view and exposes the introductory reflection surface 41a on the (-X) side of the light shielding unit 24a. An introduction port 44a of the light guide path 42a is a substantially cylindrical surface-like region extending in the X direction between an outer peripheral edge of the through hole of the first member 251a and a surface of the annular depression 258a on the (+X) side. The introduction port 44a faces the introductory reflection surface 41a in the radial direction.

An outer peripheral surface which is a side surface outside the annular depression 258a in the radial direction is an internal reflection surface 421a which corresponds to the first internal reflection surface 421, the second internal reflection surface 422, and the third internal reflection surface 423 described above. The internal reflection surface 421a is a substantially annular inclined surface around the optical axis J35. The internal reflection surface 421a has a substantially truncated cone side-surface shape going toward the (-X) side as it goes outward in the radial direction. The internal reflection surface 421a faces the introduction port 44a and the introductory reflection surface 41a in the radial direction. The height of the internal reflection surface 421a in the X direction is almost the same as that of the introductory reflection surface 41a in the X direction.

The internal reflection surface 421a is the scattering reflection surface provided with a fine unevenness, substantially like the first internal reflection surface 421 or the like. The fine unevenness is, for example, a linear unevenness (i.e., a hairline) extending along the internal reflection surface 421a in the radial direction. In other words, the linear unevenness extends along a plane in parallel to both the depth direction up to the internal reflection surface 421a (i.e., the radial direction) and the depth direction from the internal reflection surface 421a (i.e., the X direction).

A portion of a main surface of the first member 251a on the (+X) side, which faces the annular depression 258a of the second member 252a in the X direction is a light absorbing part 43a which corresponds to the above-described light absorbing part 43. The light absorbing part 43a is a plane substantially perpendicular to the X direction and has a surface provided with a light absorbing film thereon, like the light absorbing part 43. In the exemplary case shown in FIG. 15, the light absorbing part 43a is an uneven surface whose surface is provided with the light absorbing film thereon. The projections and depressions provided on the light absorbing part 43a are, for example, concentric around the optical axis J35, and the height of the projections and depressions (i.e., the height in the X direction) is, for example, about several mm. Further, the light absorbing part 43a may be a smooth surface substantially not having the projections and depressions.

A main surface of the first member 251a on the (-X) side (i.e., a main surface of the light shielding unit 24a on the (-X) side) is a substantial plane extending substantially perpendicular to the X direction and provided with a secondary light absorption part 255a which corresponds to the secondary light absorption part 255. The secondary light absorption part 255a absorbs a high-order diffracted beam such as a second-order diffracted beam or the like in a circumference of the zero-order diffracted beam aperture 240a and the introductory reflection surface 41a.

In the light shielding unit 24a, the above-described four first-order diffracted beams from the optical modulator 22 are incident to the introductory reflection surface 41a. The four first-order diffracted beams are incident to the (+Y) side, the (-Y) side, the (+Z) side, and the (-Z) side, respectively, of the zero-order diffracted beam aperture 240a on the introductory reflection surface 41a. The introductory reflection surface 41a is disposed in the vicinity of the focus position of the four first-order diffracted beams on the optical axes J36 of the four first-order diffracted beams.

The introductory reflection surface 41a reflects the four first-order diffracted beams and guides the first-order diffracted beams to the introduction port 44a of the light guide path 42a. Specifically, the first-order diffracted beam incident to the introductory reflection surface 41a on the (+Y) side of the zero-order diffracted beam aperture 240a is reflected toward the (+Y) direction and guided to the light guide path 42a. The first-order diffracted beam incident to the introductory reflection surface 41a on the (-Y) side of the zero-order diffracted beam aperture 240a is reflected toward the (-Y) direction and guided to the light guide path 42a. The first-order diffracted beam incident to the introductory reflection surface 41a on the (+Z) side of the zero-order diffracted beam aperture 240a is reflected toward the (+Z) direction and guided to the light guide path 42a. The first-order diffracted beam incident to the introductory reflection surface 41a on the (-Z) side of the zero-order diffracted beam aperture 240a is reflected toward the (-Z) direction and guided to the light guide path 42a. A reflection direction of each first-order diffracted beam by the introductory reflection surface 41a is a direction deviating from the incident direction of each first-order diffracted beam and going away from the optical axis J35 of the zero-order diffracted beam. In other words, the introductory reflection surface 41a guides each first-order diffracted beam toward a direction to be largely separated from the zero-order diffracted beam.

The light guide path 42a is a space surrounded by the light shielding member in its circumference and extends radially in parallel to the YZ plane (i.e., a plane perpendicular to the optical axis J35 of the zero-order diffracted beam). The light guide path 42a guides the four introduced first-order lights introduced from the introduction port 44a to the internal reflection surface 421a positioned at an end portion on the side opposite to the introduction port 44a (i.e., a terminal portion which is an outer end portion in the radial direction) while diffusing the introduced first-order lights along an arrow 362 of FIG. 15.

The four introduced first-order lights incident to the internal reflection surface 421a are reflected toward the (-X) direction, to be emitted to the light absorbing part 43a which is an irradiated surface provided at the terminal portion of the light guide path 42a. The light absorbing part 43a absorbs the four introduced first-order lights guided by the light guide path 42a. On the above-described internal reflection surface 421a, the introduced first-order lights are reflected while being scattered in a circumferential direction around the optical axis J35 (hereinafter, also referred to simply as a "circumferential direction") by the above-described linear unevenness extending along the radial direction. For this reason, the cross-sectional area (i.e., the irradiation area) of the introduced first-order light emitted to the light absorbing part 43a is enlarged. On the internal reflection surface421a, since the introduced first-order lights are hardly scattered in the radial direction, it is possible to suppress the reflected light from the internal reflection surface 421a from returning to the introduction port 44a and leaking out from the light guide path 42a. Further, as shown in FIG. 15, since the surface of the light absorbing part 43a is an uneven surface formed of an inclined surface which is inclined in the X direction with respect to the Z direction, it is possible to suppress the light, among the introduced first-order lights incident to the light absorbing part 43a, which cannot be absorbed by the light absorbing part 43a and is reflected, from being reflected toward the direction of the internal reflection surface 421a (i.e., the (+X) direction). In other words, with such a structure in which the surface of the light absorbing part 43a is an inclined surface which is inclined with respect to the X direction, it is possible to cause the light incident from the internal reflection surface 421a to and reflected by the inclined surface of the light absorbing part 43a to go toward the (+Z) direction or the (-Z) direction and to be incident to another portion of the light absorbing part 43a. It is thereby possible to absorb more light by the light absorbing part 43a and further reduce the amount of light leaking outside from the light guide path 42a.

In the light shielding unit 24a, the four regions (i.e., regions on the (+Y) side, the (-Y) side, the (+Z) side, and the (-Z) side of the zero-order diffracted beam aperture 240a) to which the four first-order diffracted beams are incident, respectively, and then guided as the four introduced first-order lights to the light absorbing part 43a can be regarded as four light shielding parts 241a. As described above, each of the light shielding parts 241a includes the introductory reflection surface 41a, the light guide path 42a, the internal reflection surface 421a, and the light absorbing part 43a. The introductory reflection surface 41a, the light guide path 42a, and the internal reflection surface 421a of each light shielding part 241a are part of the inner peripheral surface of the annular depression 258a, part of the annular depression 258a, and part of the outer peripheral surface of the annular depression 258a, respectively.

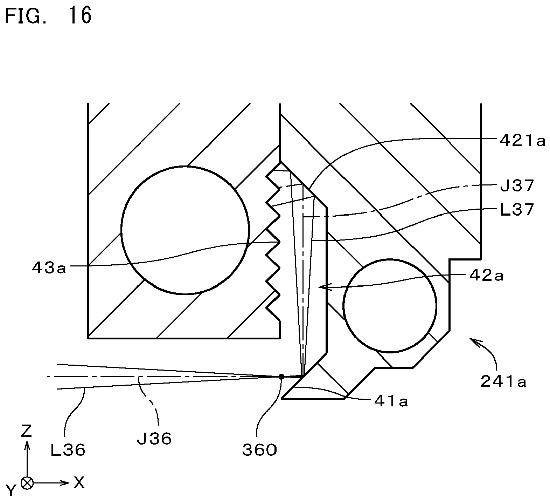

FIG. 16 is a cross section showing one light shielding part 241a which is enlarged. In FIG. 16, the first-order diffracted beam L36 incident to the introductory reflection surface 41a is drawn by a solid line and the optical axis J36 of the first-order diffracted beam L36 is drawn by a one-dot chain line. Further, in FIG. 16, the introduced first-order light L37 in a case where there occurs no scattering or the like in the internal reflection surface 421a is drawn by a solid line and the optical axis J37 of the introduced first-order light L37 is drawn by a one-dot chain line.

As described above, the introductory reflection surface 41a is disposed in the vicinity of the focus position 360 of the first-order diffracted beam L36. In the exemplary case shown in FIG. 16, the introductory reflection surface 41a is disposed on a backward side of the focus position 360 of the first-order diffracted beam L36 on the optical axis J36 of the first-order diffracted beam L36 (i.e., on the side opposite to the optical modulator 22 with the focus position 360 interposed therebetween, along the optical axis J36 of the first-order diffracted beam L36). In other words, the focus position 360 of the first-order diffracted beam L36 is positioned between the introductory reflection surface 41a and the optical modulator 22 (see FIGs. 11 and 12).

The first-order diffracted beam L36 going from the optical modulator 22 toward the introductory reflection surface 41a passes the focus position 360 described above, and then is incident to the introductory reflection surface 41a while the area of the cross section thereof perpendicular to the optical axis L36 is enlarged (i.e., while being diffused). The introduced first-order light L37 reflected by the introductory reflection surface 41a and introduced to the light guide path 42a goes inside the light guide path 42a toward the internal reflection surface 421a while being diffused substantially in the same manner. Also after being reflected by the internal reflection surface 421a, while being diffused substantially in the same manner, the introduced first-order light L37 is guided to the light absorbing part 43a. For this reason, an irradiation area of the introduced first-order light L37 on the light absorbing part 43a increases and the power density of the introduced first-order light L37 is reduced. As a result, it is possible to suppress the temperature rise of the light absorbing part 43a (a local temperature rise in a region to which the introduced first-order light L37 is emitted).

As shown in FIG. 15, inside the first member 251a, a cooling channel 256a is provided on the (-X) side of the light absorbing part 43a. The cooling channel 256a is disposed in the vicinity of the light absorbing part 43a (i.e., the main surface of the first member 251a on (+X) side). The cooling channel 256a has, for example, a rectangular frame-like shape substantially overlapping the annular depression 258a in a front view. Inside the cooling channel 256a, a coolant such as water or the like flows. It is thereby possible to further suppress the temperature rise of the light absorbing part 43a.

Further, inside the second member 252a, a cooling channel 259a is provided on the (+X) side of the light guide path 42a. The cooling channel 259a is disposed in the vicinity of the light guide path 42a. The cooling channel 259a has, for example, a rectangular frame-like shape substantially overlapping the annular depression 258a in a front view. Inside the cooling channel 259a, a coolant such as water or the like flows, like in the cooling channel 256a. It is thereby possible to efficiently suppress the temperature rise even in a case where there occurs a temperature rise due to the scattering of the introduced first-order light, or the like, in the light guide path 42a. In the light shielding unit 24a, there may be a configuration where the temperature sensors are disposed in the vicinity of the cooling channels 256a and 259a and respective temperatures of the light absorbing part 43a and the light guide path 42a are measured, respectively. It is thereby possible to easily detect an abnormal temperature rise of the light shielding unit 24a.

As described above, also in the optical apparatus in accordance with the second preferred embodiment, like in the first preferred embodiment, the projection optical system 23a includes the light shielding unit 24a which passes the zero-order diffracted beam L35 from the optical modulator 22 therethrough and blocks the first-order diffracted beam L36. The light shielding unit 24a includes the zero-order diffracted beam aperture 240a, the introductory reflection surface 41a, the light guide path 42a, and the light absorbing part 43a. The zero-order diffracted beam aperture 240a is positioned in the vicinity of the focus position of the zero-order diffracted beam L35 on the optical axis J35 of the zero-order diffracted beam L35, and passes the zero-order diffracted beam L35 therethrough. The introductory reflection surface 41a is positioned in the vicinity of the focus position 360 of the first-order diffracted beam L36 on the optical axis J36 of the first-order diffracted beam L36 and in the vicinity of the zero-order diffracted beam aperture 240a. The introductory reflection surface 41a reflects the first-order diffracted beam L36 toward the direction deviating from the incident direction of the first-order diffracted beam L36 and the direction going away from the optical axis J35 of the zero-order diffracted beam L35. The light guide path 42a has the introduction port 44a to which the light from the introductory reflection surface 41a is incident and guides the light (i.e., the introduced first-order light) introduced from the introduction port 44a. The circumference of the light guide path 42a is surrounded by the light shielding member. The light absorbing part 43a absorbs the light introduced while being diffused by the light guide path 42a.

In the light shielding unit 24a, substantially like in the above-described light shielding unit 24, it is possible to suppress leakage of the light from the light shielding unit 24a to the outside, and possible to suppress the temperature rise of the light shielding unit 24a. Further, since a relatively cheap and long-lived light absorbing film can be used, it is possible to achieve reduction in the manufacturing cost and a long life of the light shielding unit 24a.

As described above, it is preferable that the introductory reflection surface 41a should be a mirror-finished surface. Further, it is preferable that the light guide path 42a should include the scattering reflection surface therein (i.e., the internal reflection surface 421a) which reflects and guides the light from the introductory reflection surface 41a while scattering the light. It is thereby possible to prevent the first-order diffracted beam L36 from scattering on the introductory reflection surface 41a and introduce substantially the total amount of first-order diffracted beam L36 incident to the introductory reflection surface 41a to the inside of the light guide path 42a. Furthermore, it is possible to promote diffusion of the introduced first-order light inside the light guide path 42a.

Preferably, the internal reflection surface 421a has the linear fine unevenness extending along a plane in parallel to both the depth direction up to the internal reflection surface 421a (i.e., the radial direction) and the depth direction from the internal reflection surface 421a (i.e., the X direction) in the light guide path 42a. It is thereby possible to suppress the introduced first-order light incident to the internal reflection surface 421a from returning toward the incident direction (i.e., inward in the radial direction) and possible to scatter the introduced first-order light. As a result, it is possible suitably promote diffusion of the introduced first-order light inside the light guide path 42a.

As described above, preferably, the introductory reflection surface 41a is disposed on the backward side of the focus position 360 of the first-order diffracted beam L36 on the optical axis J36 of the first-order diffracted beam L36. It is thereby possible to reduce the power density of the first-order diffracted beam L36 on the introductory reflection surface 41a. As a result, it is possible to suppress the temperature rise, the damage, or the like of the introductory reflection surface 41a. Further, it is possible to reliably avoid the introduced first-order light introduced from the introductory reflection surface 41a to the light guide path 42a from being focused on the reflection surface (i.e., the internal reflection surface 421a) inside the light guide path 42a. Therefore, it is possible to suppress the temperature rise, the damage, or the like of the internal reflection surface 421a.

Furthermore, the introductory reflection surface 41a may be disposed on the frontward side of the focus position 360 of the first-order diffracted beam L36 on the optical axis J36 of the first-order diffracted beam L36. Also in this case, same as above, it is possible to reduce the power density of the first-order diffracted beam L36 on the introductory reflection surface 41a. As a result, it is possible to suppress the temperature rise, the damage, or the like of the introductory reflection surface 41a. Further, in this case, it is preferable that in the light guide path 42a, the first-order diffracted beam L36 should be focused between the reflection surface (i.e., the internal reflection surface 421a) to which the introduced first-order light from the introductory reflection surface 41a is directly incident and the introductory reflection surface 41a. It is thereby possible to reduce the power density of the first-order diffracted beam L36 on the internal reflection surface 421a. As a result, it is possible to suppress the temperature rise, the damage, or the like of the internal reflection surface 421a.

The introductory reflection surface 41a may be disposed at the focus position 360 of the first-order diffracted beam L36. In this case, the area of the introductory reflection surface 41a can be reduced. Further, since the gap between the first-order diffracted beam L36 and the zero-order diffracted beam L35 increases, it is possible to easily separate the first-order diffracted beam L36 from the zero-order diffracted beam L35.

As described above, it is preferable that the light absorbing part 43a should include the uneven surface on which the light absorbing film is provided on its surface. It is thereby possible to increase the irradiation area of the introduced first-order light on the light absorbing part 43a, and possible to reduce the power density of the introduced first-order light to be emitted to the light absorbing part 43a. As a result, it is possible to further suppress the temperature rise of the light shielding unit 24a.

As described above, it is preferable that the light shielding unit 24a should further include the cooling channel 256a disposed in the vicinity of the light absorbing part 43a, inside which the coolant flows. It is thereby possible to cool the light absorbing part 43a and further suppress the temperature rise of the light shielding unit 24a. Further, it is preferable that the cooling channel 259a inside which the coolant flows should be disposed also in the vicinity of the light guide path 42a. It is thereby possible to also cool the light guide path 42a and still further suppress the temperature rise of the light shielding unit 24a.

As described above, it is preferable that in the light shielding unit 24a, the secondary light absorption part 255a which absorbs the second-order diffracted beam from the optical modulator 22 should be provided on the outer surface extending in the direction perpendicular to the optical axis J35 of the zero-order diffracted beam L35 in the circumference of the zero-order diffracted beam aperture 240a and the introductory reflection surface 41a. It is thereby possible to suppress upsizing of the light shielding unit 24a and block the second or more-order (non-zero-order) diffracted beam.

As described above, it is preferable that the light guide path 42a should extend in parallel to the plane perpendicular to the optical axis J35 of the zero-order diffracted beam L35. It is thereby possible to achieve size reduction of the light shielding unit 24a in the direction in which the optical axis J35 extends.

As described above, it is preferable that the introductory reflection surface 41a and the light guide path 42a (at least part of the member surrounding the light guide path 42a in its circumference) should be provided in one cutting block formed by cutting processing (the second member 252a in the above-described exemplary case). It is thereby possible to manufacture the light shielding unit 24a in a state where the relative position of the introductory reflection surface 41a and the light guide path 42a is maintained with high accuracy.

As described above, it is preferable that the introductory reflection surface 41a should surround the circumference of the zero-order diffracted beam aperture 240a and should be part of the circumferential inclined surface going away from the optical axis J35 of the zero-order diffracted beam L35 as it goes from the frontward side of the optical axis direction of the zero-order diffracted beam L35 toward the backward side thereof. Further, it is preferable that the light guide path 42a should be part of the annular space extending radially outward from the circumferential inclined surface. Even in a case where a large number of first-order diffracted beams L36 are blocked by the light shielding unit 24a, it is thereby possible to easily deal with the case without changing the structure of the light shielding unit 24a.

Also in the three-dimensional modeling apparatus 1 (see FIG. 1) provided with the light shielding unit 24a, same as above, the power density of the modulated beam L33 to be emitted onto the modeling material 91 can be suitably increased. As a result, it is possible to increase the modeling speed of a modeled object in the three-dimensional modeling apparatus 1 and increase the productivity.

Next, an optical apparatus in accordance with the third preferred embodiment of the present invention will be described. In the optical apparatus in accordance with the third preferred embodiment, provided is a light shielding unit 24b having a structure different from that of the above-described light shielding unit 24 or 24a. Further, in the optical apparatus, by using a two-dimensional spatial light modulating element (for example, an LPLV) as the optical modulator 22 and changing the optical elements of the illumination optical system 21 and the projection optical system 23 (see FIG. 1), achieved is a state in which the zero-order diffracted beam, the first-order diffracted beam, and the second or more-order (non-zero-order) diffracted beam which are incident to the light shielding unit 24b are focused only in one of the long axis direction and the short axis direction.

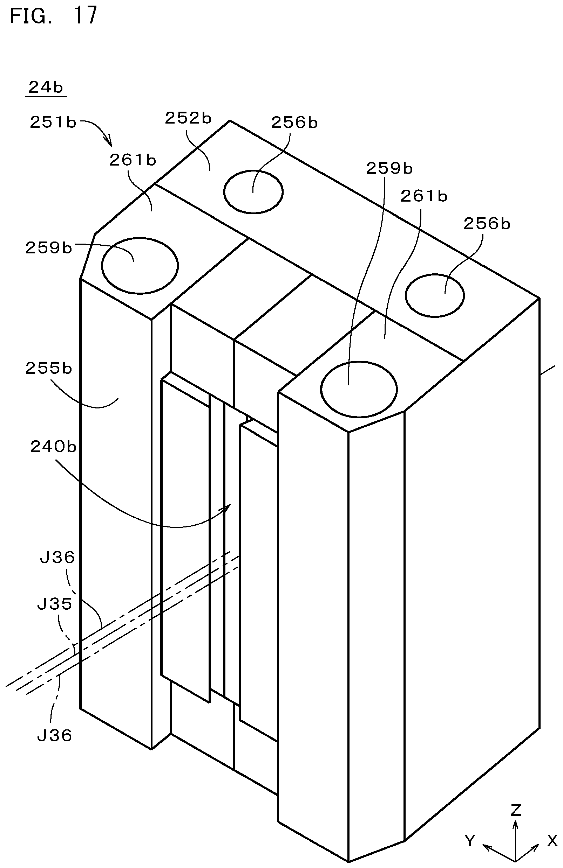

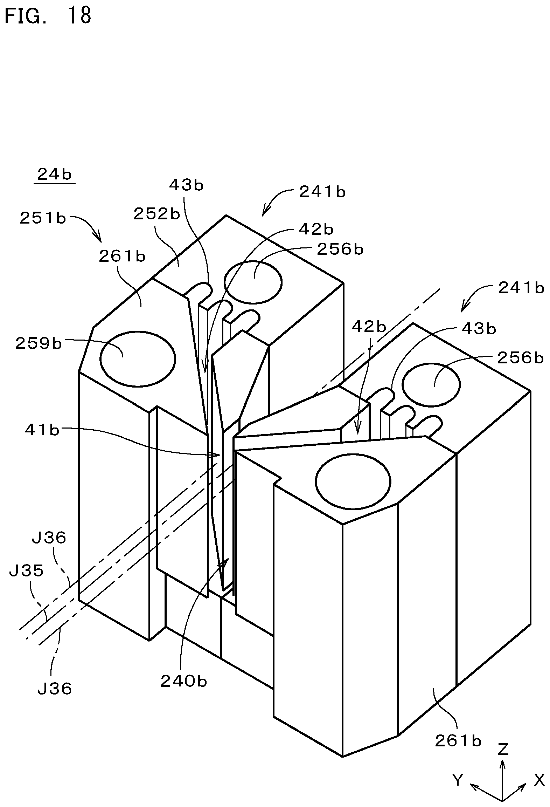

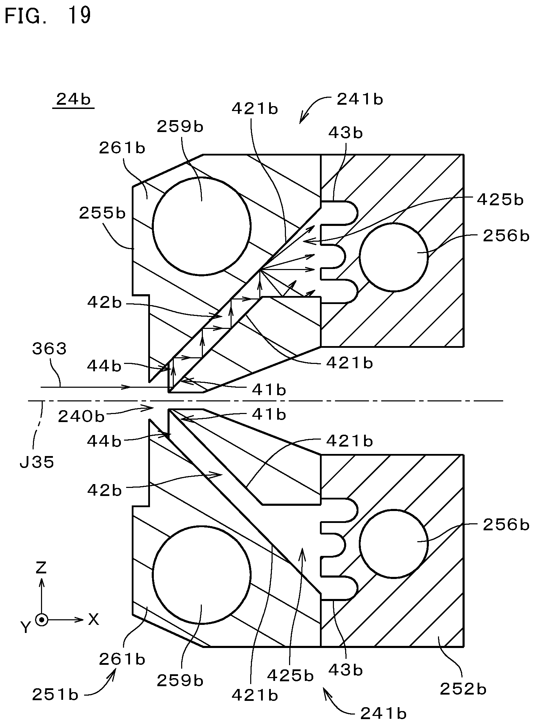

FIG. 17 is a perspective view showing an appearance of the light shielding unit 24b. FIG. 18 is a perspective view showing the inside of the light shielding unit 24b. In FIG. 18, upper part of the light shielding unit 24b is not shown. FIG. 19 is a transverse cross section of the light shielding unit 24b.

The light shielding unit 24b is disposed in the vicinity of the focus position of the zero-order diffracted beam b from the optical modulator 22 (see FIG. 1), and includes a zero-order diffracted beam aperture 240b through which the zero-order diffracted beam passes and blocks the first-order diffracted beam. The zero-order diffracted beam and the first-order diffracted beam which are incident to the light shielding unit 24b are focused only in the short axis direction and not focused in the long axis direction (i.e., the up-and-down direction of FIG. 17). In other words, the zero-order diffracted beam and the first-order diffracted beam are each a planar beam extending in the long axis direction. The zero-order diffracted beam aperture 240b has a slit-like shape extending in the long axis direction (i.e., the Z direction). The zero-order diffracted beam aperture 240b blocks two first-order diffracted beams focused on both the sides of the short axis direction (i.e., the (+Y) side and the (-Y) side) of the zero-order diffracted beam.

The light shielding unit 24b includes a first member 251b and a second member 252b. The first member 251b and the second member 252b are each a substantially rectangular parallelepiped member provided with a slit (i.e., a through hole or a groove which is long in the up-and-down direction) corresponding to the zero-order diffracted beam aperture 240b, at its center portion. The first member 251b and the second member 252b are aligned in this order from the (-X) side (i.e., the frontward side of the optical axis direction which is a direction in which the optical axis J35 of the zero-order diffracted beam extends) on the optical axis J35 of the zero-order diffracted beam, and fixed to each other, to thereby form the light shielding unit 24b.

The first member 251b and the second member 252b are light shielding members which the light from the optical modulator 22 cannot permeate. Respective materials of the first member 251b and the second member 252b are, for example, the same as those of the first member 251, the second member 252, and the third member 253 of the above-described light shielding unit 24. The first member 251b is formed by connecting two first blocks 261b disposed adjacent to each other in the Y direction. Each of the first blocks 261b is a light shielding part 241b including an introductory reflection surface 41b and a light guide path 42b, as described later. Each of the two first blocks 261b is, for example, one cutting block formed by cutting processing. Alternatively, each first block 261b may be formed by fixing a plurality of cutting blocks to one another.

In the first member 251b, a slit-like space extending in the Z direction between the two first blocks 261b which are separated away from each other in the Y direction corresponds to the zero-order diffracted beam aperture 240b. Further, each first block 261b is provided with the light guide path 42b going toward a direction going away from the zero-order diffracted beam aperture 240b (i.e., a direction going away from the optical axis J35 of the zero-order diffracted beam) as it goes toward the (+X) direction. The light guide path 42b is a slit-like space extending in a direction inclined with respect to the optical axis J35 of the zero-order diffracted beam and the Z direction.

Both side surfaces of the light guide path 42b are a pair of reflection surfaces 421b in parallel to each other. Each reflection surface 421b is, for example, a mirror-finished surface. The first-order diffracted beam from the optical modulator 22 is incident to an end portion (i.e., an end portion on a side closer to the optical axis J35 of the zero-order diffracted beam) on the (-X) side of the reflection surface 421b on the (+X) side of the pair of reflection surfaces 421b and is reflected by the end portion and guided to the light guide path 42b, as indicated by an arrow 363 in FIG. 19. In other words, the end portion is the introductory reflection surface 41b for guiding the first-order diffracted beam to the light guide path 42b. Further, a space of the light guide path 42b, in the vicinity of the introductory reflection surface 41b, is an introduction port 44b.

The introduced first-order light introduced to the inside of the light guide path 42b from the introductory reflection surface 41b is repeatedly reflected between the pair of reflection surfaces 421b along the arrow 363, reciprocating between the pair of reflection surfaces 421b, and is guided toward the (+X) direction and a direction going away from the optical axis J35 of the zero-order diffracted beam inside the light guide path 42b. In other words, a portion of the pair of reflection surfaces 421b, which excludes the introductory reflection surface 41b (i.e., an end portion on the (-X) side of the reflection surface 421b on the (+X) side), is an internal reflection surface provided inside the light guide path 42b.

The introduced first-order light is guided to a terminal portion 425b (i.e., an end portion on the (+X) side) of the light guide path 42b while being diffused, same as above. In the terminal portion 425b of the light guide path 42b, a distance between the pair of reflection surfaces 421b in a plan view gradually increases as it goes toward the (+X) side. At the terminal portion 425b of the light guide path 42b, the introduced first-order light is repeatedly reflected between the pair of reflection surfaces 421b and thereby further diffused. The introduced first-order light passing the terminal portion 425b of the light guide path 42b is absorbed by a light absorbing part 43b provided in a region of a main surface of the second member 252b on the (-X) side, which faces the terminal portion 425b and the X direction. Since the introduced first-order light is diffused as described above, the irradiation area of the introduced first-order light on the light absorbing part 43b increases and the power density of the introduced first-order light is reduced. As a result, it is possible to suppress the temperature rise of the light absorbing part 43b (especially, a local temperature rise in a region to which the introduced first-order light is emitted).

In the light guide path 42b, at the terminal portion 425b, the pair of reflection surfaces 421b may be provided with a fine unevenness, to thereby become scattering reflection surfaces. It is thereby possible to promote diffusion of the introduced first-order light at the terminal portion 425b and further suppress the temperature rise of the light absorbing part 43b. The fine unevenness is, for example, a linear unevenness extending in the X direction along each reflection surface 421b (i.e., extending along a plane in parallel to both the depth direction up to each reflection surface 421b and the depth direction from each reflection surface 421b at the terminal portion 425b of the light guide path 42b). It is thereby possible to suppress the reflected light at the terminal portion 425b of each reflection surface 421b from returning to the introduction port 44b and leaking out from the light guide path 42b.

The light absorbing part 43b is an uneven surface provided with the light absorbing film on its surface. The projections and depressions provided on the light absorbing part 43b have, for example, a grooved shape extending substantially in parallel to the Z direction, and the height of the projections and depressions is, for example, about several mm. With such a structure in which the light absorbing part 43b is an uneven surface, the irradiation area of the introduced first-order light on the light absorbing part 43b increases and the power density is reduced. As a result, it is possible to further suppress the temperature rise of the light absorbing part 43b.

Inside the second member 252b, a cooling channel 256b is provided on the (+X) side of the light absorbing part 43b. The cooling channel 256b is disposed in the vicinity of the light absorbing part 43b. The cooling channel 256b extends, for example, substantially linearly in the Z direction and substantially overlaps the light absorbing part 43b in a front view. It is thereby possible to cool the light absorbing part 43b and further suppress the temperature rise of the light shielding unit 24b.

Inside the first member 251b, a cooling channel 259b is provided opposite to the zero-order diffracted beam aperture 240b with the light guide path 42b interposed therebetween. The cooling channel 259b is disposed in the vicinity of the light guide path 42b. The cooling channel 259b extends, for example, substantially linearly in the Z direction and substantially overlaps the light guide path 42b in a front view and a side view. It is thereby possible to cool the light guide path 42b and further suppress the temperature rise of the light shielding unit 24b. In the light shielding unit 24b, there may be a configuration where the temperature sensors are disposed in the vicinity of the cooling channels 256b and 259b and the respective temperatures of the light absorbing part 43b and the light guide path 42b are measured. It is thereby possible to easily detect an abnormal temperature rise of the light shielding unit 24b.

In the light shielding unit 24b, the distance between the two first blocks 261b of the first member 251b in the Y direction may be changeable. The change in the distance is performed, for example, by changing the length of a connecting member in the Y direction, which connects the two first blocks 261b. Since the distance in the Y direction between the zero-order diffracted beam aperture 240b and the introductory reflection surface 41b of each first block 261b in the Y direction can be thereby changed, it is possible to easily deal with the change in the distance in the Y direction between the optical axis J35 of the zero-order diffracted beam and the optical axis J36 of the first-order diffracted beam due to the change of the optical modulator 22 or the like.

In the light shielding unit 24b, a main surface of the first member 251b on the (-X) side (i.e., the main surface of the light shielding unit 24b on the (-X) side) is a substantially flat plane extending substantially perpendicular to the X direction and includes a secondary light absorption part 255b which corresponds to the above-described secondary light absorption part 255. The secondary light absorption part 255b absorbs a high-order diffracted beam such as a second-order diffracted beam or the like in a circumference of the zero-order diffracted beam aperture 240b and the introductory reflection surface 41b.

As described above, also in the optical apparatus in accordance with the third preferred embodiment, like in the first preferred embodiment, the light shielding unit 24b includes the zero-order diffracted beam aperture 240b, the introductory reflection surface 41b, the light guide path 42b, and the light absorbing part 43b. The zero-order diffracted beam aperture 240b is positioned in the vicinity of the focus position of the zero-order diffracted beam on the optical axis J35 of the zero-order diffracted beam, and passes the zero-order diffracted beam therethrough. The introductory reflection surface 41b is positioned in the vicinity of the focus position of the first-order diffracted beam on the optical axis J36 of the first-order diffracted beam and in the vicinity of the zero-order diffracted beam aperture 240b. The introductory reflection surface 41b reflects the first-order diffracted beam toward the direction deviating from the incident direction of the first-order diffracted beam and going away from the optical axis J35 of the zero-order diffracted beam. The light guide path 42b has the introduction port 44b to which the light from the introductory reflection surface 41b is incident and guides the light (i.e., the introduced first-order light) introduced from the introduction port 44b. The circumference of the light guide path 42b is surrounded by the light shielding member. The light absorbing part 43b absorbs the light introduced while being diffused by the light guide path 42b.

In the light shielding unit 24b, substantially like in the above-described light shielding unit 24, it is possible to suppress leakage of the light from the light shielding unit 24b to the outside, and possible to suppress the temperature rise of the light shielding unit 24b. Further, since a relatively cheap and long-lived light absorbing film can be used, it is possible to achieve reduction in the manufacturing cost and a long life of the light shielding unit 24b.

As described above, it is preferable that the introductory reflection surface 41b should be a mirror-finished surface. Further, it is preferable that the light guide path 42b should include the scattering reflection surface therein (in the above-described exemplary case, the reflection surface 421b at the terminal portion 425b of the light guide path 42b) which reflects and guides the light from the introductory reflection surface 41b while scattering the light. It is thereby possible to prevent the first-order diffracted beam from scattering on the introductory reflection surface 41b and introduce substantially the total amount of first-order diffracted beam incident to the introductory reflection surface 41b to the inside of the light guide path 42b. Furthermore, it is possible to promote diffusion of the introduced first-order light inside the light guide path 42b.

The above-described scattering reflection surface (i.e., the reflection surface 421b at the terminal portion 425b of the light guide path 42b) preferably has the linear fine unevenness extending along a plane in parallel to both the depth direction up to the scattering reflection surface and the depth direction from the scattering reflection surface in the light guide path 42b. It is thereby possible to suppress the introduced first-order light reflected by the scattering reflection surface from returning toward the incident direction and possible to scatter the introduced first-order light. As a result, it is possible suitably promote diffusion of the introduced first-order light inside the light guide path 42b. Further, in the light shielding unit 24b, a portion of the pair of reflection surfaces 421b, which excludes the terminal portion 425b, and/or the introductory reflection surface 41b may be the scattering reflection surface.

In the light shielding unit 24b, like in the light shielding unit 24a, the introductory reflection surface 41b may be disposed on the backward side of the focus position of the first-order diffracted beam on the optical axis J36 of the first-order diffracted beam. It is thereby possible to reduce the power density of the first-order diffracted beam on the introductory reflection surface 41b. As a result, it is possible to suppress the temperature rise, the damage, or the like of the introductory reflection surface 41b. Further, it is possible to reliably avoid the introduced first-order light introduced from the introductory reflection surface 41b to the light guide path 42b from being focused on the reflection surface 421b inside the light guide path 42b. Therefore, it is possible to suppress the temperature rise, the damage, or the like of the reflection surface 421b.

Further, in the light shielding unit 24b, substantially like in the light shielding unit 24, the introductory reflection surface 41b may be disposed on the frontward side of the focus position of the first-order diffracted beam on the optical axis J36 of the first-order diffracted beam. Also in this case, same as above, it is possible to reduce the power density of the first-order diffracted beam on the introductory reflection surface 41b. As a result, it is possible to suppress the temperature rise, the damage, or the like of the introductory reflection surface 41b. Further, in this case, it is preferable that in the light guide path 42b, the first-order diffracted beam should be focused between the reflection surface (i.e., the reflection surface 421b facing the introductory reflection surface 41b) to which the introduced first-order light from the introductory reflection surface 41b is directly incident and the introductory reflection surface 41b. It is thereby possible to reduce the power density of the first-order diffracted beam on the reflection surface 421b facing the introductory reflection surface 41b. As a result, it is possible to suppress the temperature rise, the damage, or the like of the reflection surface 421b.

Furthermore, the introductory reflection surface 41b may be disposed at the focus position of the first-order diffracted beam. In this case, since the gap in the Y direction between the first-order diffracted beam and the zero-order diffracted beam increases, it is possible to easily separate the first-order diffracted beam from the zero-order diffracted beam.

As described above, it is preferable that the light absorbing part 43b should include the uneven surface on which the light absorbing film is provided on its surface. It is thereby possible to increase the irradiation area of the introduced first-order light on the light absorbing part 43b, and possible to reduce the power density of the introduced first-order light to be emitted to the light absorbing part 43b. As a result, it is possible to further suppress the temperature rise of the light shielding unit 24b.

As described above, it is preferable that the light shielding unit 24b should further include the cooling channel 256b disposed in the vicinity of the light absorbing part 43b, inside which the coolant flows. It is thereby possible to cool the light absorbing part 43b and further suppress the temperature rise of the light shielding unit 24b. Further, it is preferable that the cooling channel 259a inside which the coolant flows should be disposed also in the vicinity of the light guide path 42b. It is thereby possible to also cool the light guide path 42b and still further suppress the temperature rise of the light shielding unit 24b.

In the light shielding unit 24b, substantially like in the light shielding unit 24, it is preferable that the secondary light absorption part 255b which absorbs the second-order diffracted beam from the optical modulator 22 should be provided on the outer surface extending in the direction perpendicular to the optical axis J35 of the zero-order diffracted beam in the circumference of the zero-order diffracted beam aperture 240b and the introductory reflection surface 41b. It is thereby possible to suppress upsizing of the light shielding unit 24b and block the second or more-order (non-zero-order) diffracted beam.

As described above, it is preferable that the introductory reflection surface 41b and the light guide path 42b (at least part of the member surrounding the light guide path 42b in its circumference) should be provided in one cutting block formed by cutting processing (the first block 261b of the first member 251b in the above-described exemplary case). It is thereby possible to manufacture the light shielding unit 24b in a state where the relative position of the introductory reflection surface 41b and the light guide path 42b is maintained with high accuracy.

As described above, the light shielding unit 24b blocks a plurality of (two in the above-described exemplary case) first-order diffracted beams from the optical modulator 22, and includes a plurality of light shielding parts 241b corresponding to the plurality of first-order diffracted beams, respectively. Each of the light shielding parts 241b includes the introductory reflection surface 41a and the light guide path 42b. Preferably, the relative position of the plurality of light shielding parts 241a (two first blocks 261b in the above-described exemplary case) to the zero-order diffracted beam aperture 240b is variable. Since the distance in the Y direction between the zero-order diffracted beam aperture 240b and the introductory reflection surface 41b of each first block 261b can be thereby changed, it is possible to easily deal with the change in the distance in the Y direction between the optical axis J35 of the zero-order diffracted beam and the optical axis J36 of the first-order diffracted beam due to the change of the optical modulator 22 or the like.

Also in the three-dimensional modeling apparatus 1 (see FIG. 1) provided with the light shielding unit 24b, same as above, the power density of the modulated beam L33 to be emitted onto the modeling material 91 can be suitably increased. As a result, it is possible to increase the modeling speed of a modeled object in the three-dimensional modeling apparatus 1 and increase the productivity.

In the light shielding units 24, 24a, and 24b, the optical apparatus 12, and the three-dimensional modeling apparatus 1 described above, various modifications can be made.

For example, the shape and structure of the light absorbing part 43 of the light shielding unit 24 may be changed in various ways. The light absorbing part 43, for example, may have an uneven surface, or may be provided with a smooth surface, instead of the uneven surface. The same applies to the light absorbing part 43a of the light shielding unit 24a and the light absorbing part 43b of the light shielding unit 24b.

The shape and structure of the secondary light absorption part 255 of the light shielding unit 24 may be changed in various ways. Alternatively, in the light shielding unit 24, the secondary light absorption part 255 may be omitted. The same applies to the secondary light absorption part 255a of the light shielding unit 24a and the secondary light absorption part 255b of the light shielding unit 24b.

In the light shielding unit 24, the introductory reflection surface 41, the first internal reflection surface 421, the second internal reflection surface 422, and the third internal reflection surface 423 may each be a mirror-finished surface or a scattering reflection surface. The same applies to the introductory reflection surface 41a and the first internal reflection surface 421a of the light shielding unit 24a and the introductory reflection surface 41b and the reflection surface 421b of the light shielding unit 24b.

In the light shielding unit 24, in the case where the first internal reflection surface 421, the second internal reflection surface 422, and the third internal reflection surface 423 are each provided with the fine unevenness 424, the fine unevenness 424 does not necessarily need to be a linear fine unevenness extending in the above-described direction, but may be changed in various ways, e.g., to a satin-finished fine unevenness or the like. The same applies to the first internal reflection surface 421a of the light shielding unit 24a and the reflection surface 421b of the light shielding unit 24b.

In the light shielding unit 24, the arrangement of the cooling channel 256 is not limited to the above-described exemplary one, but may be changed in various ways. Further, in the light shielding unit 24, the cooling channel 256 may be omitted. The same applies to the cooling channel 256a or 259a of the light shielding unit 24a and the cooling channel 256b or 259b of the light shielding unit 24b.

In the light shielding unit 24, the light guide path 42 does not necessarily need to extend in parallel to the plane perpendicular to the optical axis J35 of the zero-order diffracted beam L35, but may extend in a direction inclined with respect to the plane. The same applies to the light shielding unit 24a.

In the light shielding unit 24a, the shape of each of the introductory reflection surface 41a, the light guide path 42a, the first internal reflection surface 421a, and the light absorbing part 43a in a front view does not necessarily need to be annular, but may be changed in various ways, e.g., to a substantially rectangular annular shape or the like, only if it is a ring-like shape.

The light shielding unit 24b does not necessarily need to be used to block the planar beam focused in only one of the long axis direction and the short axis direction, but may be used to block the beam focused both in the long axis direction and in the short axis direction. Further, the light shielding unit 24 or 24a may be used to block the planar beam.

Also in the light shielding unit 24, like in the light shielding unit 24b, the relative position of a plurality of light shielding parts 241 to the zero-order diffracted beam aperture 240 may be variable. As described above, it is thereby possible to easily deal with the change in the distance between the optical axis J35 of the zero-order diffracted beam L35 and the optical axis J36 of the first-order diffracted beam L36 due to the change of the optical modulator 22 or the like. The same applies to the light shielding unit 24a.

Each of the constituent elements constituting the light shielding unit 24, 24a, or 24b does not necessarily need to be formed by cutting processing, but may be formed by any one of other various methods.

The optical modulator 22 of the optical apparatus 12 is not limited to the GLV, the PLV, the LPLV, or the DMD described above, but may be changed in various ways. Further, the shape of the laser beam collimated by the illumination optical system 21 is not limited to the above-described example, but may be changed in various ways.

The scanning part 13 of the three-dimensional modeling apparatus 1 does not necessarily need to include the galvanometer mirror 132, but may have any other constituent element such as a polygon laser scanner or the like as described above. Alternatively, the scanning part 13 is not limited to one that changes the traveling direction of the modulated beam L33 from the projection optical system 23, but may be, for example, a moving mechanism such as a linear motor or the like for moving the modeling part 141 in a horizontal direction, which holds the modeling material 91 in a state where an irradiation position of the modulated beam L33 is fixed.

The optical apparatus 12 does not necessarily need to be provided in the three-dimensional modeling apparatus 1, but may be used in, for example, a laser beam machine such as a laser marking apparatus or the like.

The configurations in the above-described preferred embodiments and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: Three-dimensional modeling apparatus
- 11: Laser light source
- 12: Optical apparatus
- 13: Scanning part
- 21: Illumination optical system
- 22: Optical modulator
- 23, 23a: Projection optical system
- 24, 24a, 24b: Light shielding unit
- 41, 41a, 41b: Introductory reflection surface
- 42, 42a, 42b: Light guide path
- 43, 43a, 43b: Light absorbing part
- 44, 44a, 44b: Introduction port
- 91: Modeling material
- 240, 240a, 240b: Zero-order diffracted beam aperture
- 241, 241a, 241b: Light shielding part
- 251, 251a, 251b: First member
- 252, 252a, 252b: Second member
- 253: Third member
- 255, 255a, 255b: Secondary light absorption part
- 256, 256a, 256b: Cooling channel
- 261b: First block
- 360: Focus position
- 421: First internal reflection surface
- 421a: Internal reflection surface
- 421b: Reflection surface
- 422: Second internal reflection surface
- 423: Third internal reflection surface
- 424: Fine unevenness
- J35, J36, J37: Optical axis
- L31: Laser beam
- L32: Parallel beam
- L33: Modulated beam
- L35: Zero-order diffracted beam
- L36: First-order diffracted beam
- L37: Introduced first-order light

## Claims

1. An optical apparatus for emitting a modulated beam onto a target object, comprising:
an illumination optical system for collimating a laser beam emitted from a laser light source into a predetermined shape;
an optical modulator for modulating said laser beam collimated by said illumination optical system into a modulated beam; and
a projection optical system for guiding said modulated beam onto a target object,
wherein said projection optical system comprises a light shielding unit for passing a zero-order diffracted beam from said optical modulator therethrough and blocking a first-order diffracted beam,
said light shielding unit comprises:
a zero-order diffracted beam aperture positioned in vicinity of a focus position of said zero-order diffracted beam on an optical axis of said zero-order diffracted beam, for passing said zero-order diffracted beam therethrough;
an introductory reflection surface positioned in vicinity of a focus position of said first-order diffracted beam on an optical axis of said first-order diffracted beam and in vicinity of said zero-order diffracted beam aperture, for reflecting said first-order diffracted beam in a direction deviating from an incident direction of said first-order diffracted beam and going away from said optical axis of said zero-order diffracted beam;
a light guide path having an introduction port to which light from said introductory reflection surface is incident and guiding light introduced from said introduction port, which is surrounded by a light shielding member; and
a light absorbing part for absorbing light guided while being diffused by said light guide path.

2. The optical apparatus according to claim 1, wherein
said introductory reflection surface is a mirror-finished surface, and
said light guide path comprises therein a scattering reflection surface for reflecting and guiding while scattering light from said introductory reflection surface.

3. The optical apparatus according to claim 2, wherein
said scattering reflection surface has a linear fine unevenness extending along a plane parallel to both a depth direction up to said scattering reflection surface and another depth direction from said scattering reflection surface in said light guide path.

4. The optical apparatus according to any one of claims 1 to 3, wherein
said introductory reflection surface is disposed on a frontward side of said focus position of said first-order diffracted beam on said optical axis of said first-order diffracted beam, and said first-order diffracted beam is focused between a reflection surface to which light from said introductory reflection surface is directly incident and said introductory reflection surface in said light guide path.

5. The optical apparatus according to any one of claims 1 to 4, wherein
said light absorbing part comprises an uneven surface provided with a light absorbing film on a surface thereof.

6. The optical apparatus according to any one of claims 1 to 5, wherein
said light shielding unit further comprises a cooling channel disposed in vicinity of said light absorbing part, inside which a coolant flows.

7. The optical apparatus according to claim 6, wherein
a cooling channel inside which a coolant flows is disposed also in vicinity of said light guide path.

8. The optical apparatus according to any one of claims 1 to 7, wherein
said light shielding unit is provided with a secondary light absorption part for absorbing a second-order diffracted beam from said optical modulator, on an outer surface extending in a direction perpendicular to said optical axis of said zero-order diffracted beam in said zero-order diffracted beam aperture and a circumference of said introductory reflection surface.

9. The optical apparatus according to any one of claims 1 to 8, wherein
said light guide path extends in parallel to a plane perpendicular to said optical axis of said zero-order diffracted beam.

10. The optical apparatus according to claim 9, wherein
said light guide path extends while bending in a circumference of said zero-order diffracted beam aperture, to thereby surround said zero-order diffracted beam aperture.

11. The optical apparatus according to any one of claims 1 to 9, wherein
said introductory reflection surface is part of a circumferential inclined surface surrounding a circumference of said zero-order diffracted beam aperture and going away from said optical axis of said zero-order diffracted beam as it goes from a frontward side to a backward side in an optical axis direction of said zero-order diffracted beam, and
said light guide path is part of an annular space extending radially outward from said circumferential inclined surface.

12. The optical apparatus according to any one of claims 1 to 8, wherein
said zero-order diffracted beam and said first-order diffracted beam are each a planar beam extending in an up-and-down direction,
said light guide path comprises a pair of reflection surfaces parallel to each other, which extend in a direction inclined to said optical axis of said zero-order diffracted beam and said up-and-down direction,
said introductory reflection surface is an end portion on a side closer to said zero-order diffracted beam on one reflection surface among said pair of reflection surfaces, and
light from said introductory reflection surface is guided in said light guide path while reciprocating between said pair of reflection surfaces.

13. The optical apparatus according to any one of claims 1 to 12, wherein
said introductory reflection surface and said light guide path are provided in one cutting block formed by cutting processing.

14. The optical apparatus according to claim 13, wherein
said light shielding unit blocks a plurality of first-order diffracted beams from said optical modulator,
said light shielding unit comprises a plurality of light shielding parts corresponding to said plurality of first-order diffracted beams, respectively,
each light shielding part comprises said introductory reflection surface and said light guide path, and
respective relative positions of said plurality of light shielding parts to said zero-order diffracted beam aperture are variable.

15. A three-dimensional modeling apparatus, comprising:
said optical apparatus according to any one of claims 1 to 14;
a laser light source for emitting said laser beam to said optical apparatus; and
a scanning part which is said target object irradiated with said modulated beam from said optical apparatus and scans said modulated beam on a modeling material.
